# EUROPEAN PATENT APPLICATION

(11) **EP 3 922 699 A1**
(43) Date of publication of application: **15.12.2021**
(21) Application number: 20753249.0
(22) Date of filing: 03.02.2020
(51) Int. Cl.: C09K 15/06, C09K 15/08, C09K 15/18, C09K 15/32, C08L 63/00

(54) **STABILIZING AGENT COMPOSITION, VINYL CHLORIDE RESIN COMPOSITION CONTAINING SAME AND MOLDED BODY THEREOF**

(30) Priority: 04.02.2019 JP 2019018292
(71) Applicant: ADEKA CORPORATION, Arakawa-ku Tokyo 116-8554 (JP)
(72) Inventor: UNO Shota, Tokyo 116-8554 (JP); HARADA Yohei, Tokyo 116-8554 (JP); ISHIZUKA Yuto, Tokyo 116-8554 (JP); TANAKA Kazumasa, Tokyo 116-8554 (JP); NISHIMURA Hiroshi, Tokyo 116-8554 (JP)
(74) Representative: Müller-Boré & Partner Patentanwälte PartG mbB
(86) International application number: PCT/JP2020/003982
(87) International publication number: WO 2020/162414

(57) **Abstract**

Provided are: a stabilizer composition that can not only impart excellent thermal stability, coloration resistance, thermal coloration resistance, and the like to a vinyl chloride resin, but also impart excellent transparency to a vinyl chloride resin when used in an application where transparency is required; a vinyl chloride resin composition containing the same; and a molded body thereof. The stabilizer composition contains 5 to 2,500 parts by mass of a component (B) with respect to 100 parts by mass of a component (A). The component (A) is at least one organic acid zinc salt, and the component (B) is at least one epoxy compound having a glycidyl ether group and/or a glycidyl ester group.

## Description

### TECHNICAL FIELD

The present invention relates to a stabilizer composition, a vinyl chloride resin composition containing the same (hereinafter, also simply referred to as "composition" and "resin composition", respectively), and a molded body thereof. More particularly, the present invention relates to: a stabilizer composition that can not only impart excellent thermal stability, coloration resistance, thermal coloration resistance, and the like to a vinyl chloride resin, but also impart excellent transparency to a vinyl chloride resin when used in an application where transparency is required; a vinyl chloride resin composition containing the same; and a molded body thereof.

### BACKGROUND ART

Vinyl chloride resins are used in a variety of applications since they are excellent in flame retardancy, chemical resistance, mechanical stability, transparency, adhesiveness, printability, and the like and their hardness can be easily modified ranging from hard to soft with an addition of a plasticizer. Particularly, hard vinyl chloride resin compositions containing no plasticizer at all and semi-hard vinyl chloride resin compositions containing a small amount of plasticizer have excellent rigidity and are thus widely used in building materials and the like. Therefore, such vinyl chloride resin compositions are required to exhibit their performance at a higher level in terms of thermal stability, coloration resistance, thermal coloration resistance, weather resistance, and the like, not only during processing when they are exposed to a high temperature and a high pressure but also as molded articles.

Further, as for hard transparent molded articles, vinyl chloride resins are extremely versatile resins used also in containers, industrial boards, decorative plates, films, sheets, and the like that require glass-like transparency. On the other hand, vinyl chloride resins are known to have drawbacks in that they are not sufficiently stable against light and heat, and that they are likely to be degraded mainly due to dehydrohalogenation when they are heat-molded or used as products.

In order to satisfy the above-described performance requirements and overcome the drawbacks, attempts have been made to improve the stability of a vinyl chloride resin by incorporating various stabilizers, such as an organic acid metal salt, an organotin compound, an organophosphite compound, an epoxidized vegetable oil, a *β*-diketone compound, an antioxidant, and an ultraviolet absorber (Patent Documents 1 and 2). As such stabilizers, heavy metal-based stabilizers of lead, cadmium, or the like are conventionally used because of their advantages in cost and the like. Further, tin-based stabilizers have been proposed as stabilizers that can improve the transparency (Patent Documents 3 and 4).

### RELATED ART DOCUMENTS

### PATENT DOCUMENTS

[Patent Document 1] JPH08-183891A
[Patent Document 2] JPH10-158449A
[Patent Document 3] JPH07-62181A
[Patent Document 4] JP2008-001840A

### SUMMARY OF THE INVENTION

### PROBLEMS TO BE SOLVED BY THE INVENTION

In recent years, with the increasing interest in environmental problems, the toxicity and the environmental effects of heavy metals and the like have become problems. This has led to the use of barium-zinc-based composite stabilizers and hydrotalcite-zinc-based stabilizers. However, the use of these stabilizers has problems in that, at the time of molding, it can cause molding defects such as foaming in the resulting molded body and induce stress whitening of the molded body. Tin is also not preferred due to its environmental effects and toxicity. Further, since many tin-based stabilizers are liquid, the use of such a stabilizer has a problem of not only deteriorating the lubricity of a molten resin at the time of molding but also lowering the thermal deformation temperature (softening point) of the resulting molded body. Therefore, there is a demand for a technology that prevents deterioration of the quality of a vinyl chloride resin composition that is caused by heating, processing or use, without using a lead-based, cadmium-based, or tin-based stabilizer.

In view of the above, an object of the present invention is to provide: a stabilizer composition that can not only impart excellent thermal stability, coloration resistance, thermal coloration resistance, and the like to a vinyl chloride resin, but also impart excellent transparency to a vinyl chloride resin when used in an application where transparency is required; a vinyl chloride resin composition containing the same; and a molded body thereof.

### MEANS FOR SOLVING THE PROBLEMS

The present inventors intensively studied to solve the above-described problems and consequently discovered that a composition having the below-described formulation can impart not only excellent thermal stability, coloration resistance, thermal coloration resistance, and the like but also excellent transparency to a vinyl chloride resin, thereby completing the present invention.

That is, the stabilizer composition of the present invention is a stabilizer composition containing 5 to 2,500 parts by mass of a component (B) with respect to 100 parts by mass of a component (A), the stabilizer composition being characterized in that:
the component (A) is at least one organic acid zinc salt; and
the component (B) is at least one epoxy compound having a glycidyl ether group and/or a glycidyl ester group.

It is preferred that the composition of the present invention contain 5 to 300 parts by mass of at least one *β*-diketone compound as a component (C) with respect to 100 parts by mass of the component (A). It is also preferred that the composition of the present invention contain 5 to 700 parts by mass of at least one phosphite compound as a component (D) with respect to 100 parts by mass of the component (A). Further, it is preferred that the composition of the present invention contain 5 to 200 parts by mass of at least one phenolic antioxidant as a component (E) with respect to 100 parts by mass of the component (A). Still further, it is preferred that the composition of the present invention contain 1 to 1,000 parts by mass of at least one sugar alcohol as a component (F) with respect to 100 parts by mass of the component (A). Yet still further, it is preferred that the composition of the present invention contain 5 to 200 parts by mass of at least one hindered amine-based light stabilizer as a component (G) with respect to 100 parts by mass of the component (A). In the composition of the present invention, it is preferred that the epoxy compound of the component (B) have an oxirane oxygen concentration in a range of 3.0 to 15.0% by mass. Moreover, it is preferred that the composition of the present invention contain no organotin compound. The composition of the present invention can be suitably used as a vinyl chloride resin for a transparent product.

A vinyl chloride resin composition of the present invention is characterized by containing a vinyl chloride resin and the stabilizer composition of the present invention.

In the resin composition of the present invention, it is preferred that the stabilizer composition be contained in an amount of 0.3 to 15.0 parts by mass with respect to 100 parts by mass of the vinyl chloride resin.

A molded body of the present invention is characterized by being obtained from the vinyl chloride resin composition of the present invention.

The molded body of the present invention preferably has a haze value of 20.0 or lower at a thickness of 6 mm.

### EFFECTS OF THE INVENTION

According to the present invention, the followings can be provided: a stabilizer composition that can not only impart excellent thermal stability, coloration resistance, thermal coloration resistance, and the like to a vinyl chloride resin, but also impart excellent transparency to a vinyl chloride resin when used in an application where transparency is required; a vinyl chloride resin composition containing the same; and a molded body thereof.

### MODE FOR CARRYING OUT THE INVENTION

Embodiments of the present invention will now be described in detail.

### <1. Stabilizer Composition>

First, the stabilizer composition of the present invention will be described. The composition of the present invention is a composition that contains 5 to 2,500 parts by mass of a component (B) with respect to 100 parts by mass of a component (A). The component (A) is at least one organic acid zinc salt, and the component (B) is at least one epoxy compound having a glycidyl ether group and/or a glycidyl ester group.

### <Component (A)>

The component (A) of the composition of the present invention is at least one organic acid zinc salt. Examples of the organic acid zinc salt include zinc salts of organic carboxylic acids, phenols, or organic phosphoric acids.

Examples of the organic carboxylic acids include: monovalent carboxylic acids, such as acetic acid, propionic acid, butyric acid, valeric acid, caproic acid, enanthic acid, caprylic acid, pelargonic acid, 2-ethylhexanoic acid (octylic acid), neodecanoic acid, capric acid, undecanoic acid, isoundecylic acid, lauric acid, isolauric acid, tridecanoic acid, myristic acid, isomyristic acid, palmitic acid, isopalmitic acid, isostearic acid, stearic acid, 12-hydroxystearic acid, behenic acid, montanoic acid, versatic acid, benzoic acid, monochlorobenzoic acid, 4-*tert*-butylbenzoic acid, dimethylhydroxybenzoic acid, 3,5-di-*tert-*butyl-4-hydroxybenzoic acid, *o*-toluic acid, *m*-toluic acid, *p*-toluic acid, toluic acid, dimethylbenzoic acid, 2,4-dimethylbenzoic acid, 3,5-dimethylbenzoic acid, 2,4,6-trimethylbenzoic acid, ethylbenzoic acid, 2-ethylbenzoic acid, 3-ethylbenzoic acid, 4-ethylbenzoic acid, 2,4,6-triethylbenzoic acid, 4-isopropylbenzoic acid, *n*-propylbenzoic acid, aminobenzoic acid, *N*,*N*-dimethylaminobenzoic acid, acetoxybenzoic acid, salicylic acid, *p-*tert-octylsalicylic acid, elaidic acid, oleic acid, linoleic acid, linolenic acid, myristoleic acid, palmitoleic acid, eleostearic acid, eicosenoic acid, eicosadienoic acid, eicosatrienoic acid, eicosatetraenoic acid, arachidonic acid, docosapentaenoic acid, docosahexaenoic acid, ricinoleic acid, thioglycolic acid, mercaptopropionic acid, and octyl mercaptopropionic acid; divalent carboxylic acids, such as oxalic acid, malonic acid, succinic acid, glutaric acid, adipic acid, pimelic acid, suberic acid, azelaic acid, sebacic acid, phthalic acid, isophthalic acid, terephthalic acid, hydroxyphthalic acid, chlorophthalic acid, aminophthalic acid, maleic acid, fumaric acid, citraconic acid, mesaconic acid, itaconic acid, aconitic acid and thiodipropionic acid, and monoester or monoamide compounds of these divalent carboxylic acids; and di- or tri-ester compounds of trivalent or tetravalent carboxylic acids, such as butanetricarboxylic acid, butanetetracarboxylic acid, hemimellitic acid, trimellitic acid, mellophanic acid, and pyromellitic acid.

Examples of the phenols include *tert-*butyl phenol, nonyl phenol, dinonyl phenol, cyclohexyl phenol, phenyl phenol, octyl phenol, phenol, cresol, xylenol, *n*-butyl phenol, isoamyl phenol, ethyl phenol, isopropyl phenol, isooctyl phenol, 2-ethylhexyl phenol, *tert-*nonyl phenol, decyl phenol, *tert-*octyl phenol, isohexyl phenol, octadecyl phenol, diisobutyl phenol, methylpropyl phenol, diamyl phenol, methylisohexyl phenol, and methyl-tert-octyl phenol.

Examples of the organic phosphoric acids include mono- or di-octylphosphoric acid, mono- or di-dodecyl phosphoric acid, mono- or di-octadecyl phosphoric acid, mono- or di-(nonylphenyl)phosphoric acid, nonylphenyl phosphonate, and stearyl phosphonate.

The organic acid zinc salt, which is the component (A) of the composition of the present invention, may be an acidic salt, a neutral salt, a basic salt, or an overbased complex obtained by neutralizing a part or the entirety of the base of a basic salt with carbonic acid. Further, the organic acid zinc salt, which is the component (A) of the composition of the present invention, may be constituted by two or more organic acids. For example, in the case of a zinc salt formed by monovalent organic acids, the same organic acid may constitute an anionic moiety and form a salt with divalent zinc constituting a cationic moiety, or two different monovalent organic acids may each constitute an anionic moiety and form a salt with divalent zinc constituting a cationic moiety.

From the standpoints of thermal stability, coloration resistance and thermal coloration resistance, the organic acid zinc salt of the component (A) is preferably a zinc salt of an organic carboxylic acid, such as zinc benzoate, zinc toluate, zinc 4-*tert*-butyl benzoate, zinc stearate, zinc laurate, zinc versatate, zinc octylate, zinc oleate, zinc palmitate, or zinc myristate. Thereamong, from the standpoints of thermal stability, coloration resistance and thermal coloration resistance, a zinc salt of an aromatic carboxylic acid is more preferred and, specifically, zinc benzoate, zinc toluate, or zinc 4-*tert*-butyl benzoate is still more preferred. Further, in those applications where transparency is required, a zinc salt of an aromatic carboxylic acid is preferred and, specifically, zinc benzoate, zinc toluate, or zinc 4-*tert*-butyl benzoate is more preferred. The organic acid zinc salt of the component (A) may be used individually, or two or more thereof may be used in combination.

### <Component (B)>

The component (B) of the composition of the present invention is at least one epoxy compound having a glycidyl ether group and/or a glycidyl ester group.

Examples of the epoxy compound having a glycidyl ether group and/or a glycidyl ester group include: polyglycidyl ether compounds or diglycidyl ether compounds of mononuclear polyhydric phenol compounds, such as hydroquinone, resorcin, pyrocatechol, and phloroglucinol; polyglycidyl ether compounds or diglycidyl ether compounds of polynuclear polyhydric phenol compounds, such as dihydroxynaphthalene, biphenol, methylene bisphenol (bisphenol F), methylene bis(o-cresol), ethylidene bisphenol, isopropylidene bisphenol (bisphenol A), hydrogenated bisphenol A, isopropylidene bis(*o-*cresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfobisphenol, oxybisphenol, phenol novolac, o-cresol novolac, ethylphenol novolac, butylphenol novolac, octylphenol novolac, resorcin novolac, and terpene phenol; polyglycidyl ethers or diglycidyl ether of polyhydric alcohols, such as ethylene glycol, propylene glycol, butylene glycol, hexanediol, diethylene glycol, polyethylene glycol, dipropylene glycol, polypropylene glycol, polyglycol, thiodiglycol, glycerin, trimethylolpropane, pentaerythritol, sorbitol, bisphenol A-ethylene oxide adduct, and dicyclopentadiene dimethanol; and homo- or co-polymers of glycidyl ester of an aliphatic, aromatic or alicyclic polybasic acid, such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid or endomethylene tetrahydrophthalic acid, and glycidyl methacrylate such as polyglycidyl methacrylate.

Examples of the epoxy compound having a glycidyl ether group and/or a glycidyl ester group further include *n*-butyl glycidyl ether, C12 to C14 alkyl glycidyl ether, allyl glycidyl ether, 2-ethylhexyl glycidyl ether, phenyl glycidyl ether, cresyl glycidyl ether, 2-phenylphenol glycidyl ether, *p-sec*-butylphenyl glycidyl ether, *t*-butylphenyl glycidyl ether, glycidyl methacrylate, and tertiary carboxylic acid glycidyl esters, as well as ethylene glycol diglycidyl ether, propylene glycol diglycidyl ether, butanediol diglycidyl ether, 1,6-hexanediol diglycidyl ether, neopentyl glycol diglycidyl ether, polyethylene glycol diglycidyl ether, polypropylene glycol diglycidyl ether, trimethylolpropane triglycidyl ether, and glycerol triglycidyl ether.

From the standpoints of thermal stability, coloration resistance and thermal coloration resistance, the epoxy compound of the component (B) which has a glycidyl ether group and/or a glycidyl ester group is preferably an epoxy compound having a glycidyl ether group. This epoxy compound having a glycidyl ether group is preferably bisphenol A diglycidyl ether, hydrogenated bisphenol A diglycidyl ether, trimethylolpropane triglycidyl ether, neopentyl glycol diglycidyl ether, polypropylene glycol diglycidyl ether, alkyl glycidyl ethers having 12 to 13 carbon atoms, cresyl glycidyl ether, or 2-phenylphenol glycidyl ether, more preferably bisphenol A diglycidyl ether, hydrogenated bisphenol A diglycidyl ether, trimethylolpropane triglycidyl ether, neopentyl glycol diglycidyl ether, polypropylene glycol diglycidyl ether, or 2-phenylphenol glycidyl ether, still more preferably bisphenol A diglycidyl ether, hydrogenated bisphenol A diglycidyl ether, trimethylolpropane triglycidyl ether, neopentyl glycol diglycidyl ether, or 2-phenylphenol glycidyl ether, yet still more preferably bisphenol A diglycidyl ether, hydrogenated bisphenol A diglycidyl ether, trimethylolpropane triglycidyl ether, or 2-phenylphenol glycidyl ether.

Further, for the transparency in an application where transparency is required, an epoxy compound having a glycidyl ether group is preferred. This epoxy compound having a glycidyl ether group is preferably bisphenol A diglycidyl ether, hydrogenated bisphenol A diglycidyl ether, trimethylolpropane triglycidyl ether, cresyl glycidyl ether, neopentyl glycol diglycidyl ether, or 2-phenylphenol glycidyl ether, more preferably bisphenol A diglycidyl ether, hydrogenated bisphenol A diglycidyl ether, cresyl glycidyl ether, or 2-phenylphenol glycidyl ether, still more preferably bisphenol A diglycidyl ether, hydrogenated bisphenol A diglycidyl ether, or 2-phenylphenol glycidyl ether, yet still more preferably bisphenol A diglycidyl ether or hydrogenated bisphenol A diglycidyl ether, most preferably hydrogenated bisphenol A diglycidyl ether.

Taking into consideration all of thermal stability, coloration resistance, thermal coloration resistance and transparency, an epoxy compound having a glycidyl ether group is preferred. This epoxy compound having a glycidyl ether group is preferably bisphenol A diglycidyl ether, hydrogenated bisphenol A diglycidyl ether, trimethylolpropane triglycidyl ether, or 2-phenylphenol glycidyl ether, more preferably bisphenol A diglycidyl ether or hydrogenated bisphenol A diglycidyl ether, most preferably hydrogenated bisphenol A diglycidyl ether.

In the structure of the epoxy compound of the component (B), the number of glycidyl ether groups and/or glycidyl ester groups may be one, or two or more. Further, the epoxy compound of the component (B) may be used individually, or two or more thereof may be used in combination.

The epoxy compound of the component (B) which has a glycidyl ether group can be obtained by, for example, allowing a compound having a phenolic hydroxy group or an alcoholic hydroxy group to react with epichlorohydrin. Needless to say, a commercially available product may be used as well. Further, the epoxy compound of the component (B) which has a glycidyl ester group can be obtained by, for example, allowing a compound having a carboxyl group to react with epichlorohydrin. Needless to say, a commercially available product may be used as well.

Incidentally, epoxidized vegetable oils that are conventionally used as stabilizers or plasticizers of vinyl chloride resins, such as epoxidized soybean oil and epoxidized linseed oil, contain neither a glycidyl ether group nor a glycidyl ester group in their structures; therefore, such an epoxidized vegetable oil is not included in the epoxy compound of the component (B) of the present invention which has a glycidyl ether group and/or a glycidyl ester group. In the composition of the present invention, an "epoxidized vegetable oil" refers to a vegetable oil/fat in which double bonds are oxidized to form oxirane rings; therefore, its structure contains neither a glycidyl ether group nor a glycidyl ester group.

In the epoxy compound of the component (B) which has a glycidyl ether group and/or a glycidyl ester group, from the standpoints of thermal stability, coloration resistance, thermal coloration resistance, and transparency in an application where transparency is required, the oxirane oxygen concentration is preferably in a range of 3.0 to 15.0% by mass, more preferably in a range of 4.0 to 14.0% by mass, still more preferably in a range of 5.0 to 13.0% by mass, particularly preferably in a range of 6.0 to 12.0% by mass, most preferably in a range of 7.0 to 11.0% by mass.

In the composition of the present invention, the oxirane oxygen concentration is determined in accordance with ASTMD1652-11 e 1.

The content of the component (B) in the composition of the present invention is 5 to 2,500 parts by mass with respect to 100 parts by mass of the organic acid zinc salt of the component (A) and, from the standpoints of thermal stability, coloration resistance and thermal coloration resistance as well as transparency in an application where transparency is required, the content of the component (B) is preferably not less than 10 parts by mass, more preferably not less than 50 parts by mass, still more preferably not less than 100 parts by mass, yet still more preferably not less than 150 parts by mass, yet still more preferably not less than 200 parts by mass, particularly preferably not less than 250 parts by mass, most preferably not less than 300 parts by mass. As for an upper limit, a content of 2,500 parts by mass or higher is not preferred from the effect and cost standpoint, and the upper limit is preferably 2,000 parts by mass or less, more preferably 1,400 parts by mass or less, still more preferably 800 parts by mass or less.

### <Component (C)>

From the standpoints of thermal stability, coloration resistance and thermal coloration resistance, the composition of the present invention further contains at least one *β*-diketone compound as a component (C) in an amount of preferably 5 to 300 parts by mass, more preferably 10 to 250 parts by mass, still more preferably 20 to 200 parts by mass, with respect to 100 parts by mass of the component (A).

Examples of the *β*-diketone compound of the component (C) include acetylacetone, triacetylmethane, 2,4,6-heptatrione, butanoylacetylmethane, lauroylacetylmethane, palmitoylacetylmethane, stearoylbenzoylmethane, palmitoylbenzoylmethane, distearoylmethane, stearoylacetylmethane, phenylacetylacetylmethane, dicyclohexylcarbonylmethane, benzoylformylmethane, benzoylacetylmethane, dibenzoylmethane, octylbenzoylmethane, bis(4-octylbenzoyl)methane, benzoyldiacetylmethane, 4-methoxybenzoylbenzoylmethane, bis(4-carboxymethylbenzoyl)methane, 2-carboxymethylbenzoylacetyloctylmethane, dehydroacetic acid, ethyl acetoacetate, cyclohexane-1,3-dione, methyl 3,6-dimethyl-2,4-dioxycyclohexane-1 carboxylate, 2-acetylcyclohexanone, dimedone and 2-benzoylcyclohexane, and metal salts of these compounds can also be used in the same manner. Examples of the metal salts include lithium salts, sodium salts, potassium salts, calcium salts, zinc salts, magnesium salts, and aluminum salts. Preferred examples of the metal salts include calcium acetylacetonate and zinc acetylacetonate.

The *β*-diketone compound of the component (C) may be used individually, or two or more thereof may be used in combination. Among the above-exemplified *β*-diketone compounds, from the standpoints of thermal stability, coloration resistance and thermal coloration resistance, dibenzoylmethane, stearoylbenzoylmethane, and zinc acetylacetonate are preferred.

### <Component (D)>

From the standpoints of thermal stability, coloration resistance and thermal coloration resistance, the composition of the present invention further contains at least one phosphite compound as a component (D) in an amount of preferably 5 to 700 parts by mass, more preferably 50 to 600 parts by mass, still more preferably 100 to 500 parts by mass, with respect to 100 parts by mass of the component (A).

Examples of the phosphite compound of the component (D) include trialkyl phosphites, dialkyl phosphites, dialkyl monoallyl phosphites, alkyl allyl phosphites, monoalkyl diallyl phosphites, diallyl phosphites, and triallyl phosphites. In the composition of the present invention, both a triester and a diester can be used; however, from the standpoints of thermal stability, coloration resistance and thermal coloration resistance, it is preferred to use a triester. Further, a thioester can be used as well.

Specific examples of the phosphite compound include triphenyl phosphite, tricresyl phosphite, tris(2,4-di-*tert*-butylphenyl)phosphite, tris(nonylphenyl)phosphite, tris(dinonylphenyl)phosphite, tris(mono- or di-mixed nonylphenyl)phosphite, tris(2,4-di-*tert-*butylphenyl)phosphite, diphenyl phosphite, 2,2'-methylene-bis(4,6-di-*tert*-butylphenyl)octyl phosphite, 2,2'-methylene-bis(4,6-t*ert*-butylphenyl)-2-ethylhexyl phosphite, 2,2'-methylene-bis(4,6-*tert*-butylphenyl)-octadecyl phosphite, 2,2'-ethylidene-bis(4,6-di-*tert-*butylphenyl)fluorophosphite, octyl diphenyl phosphite, diphenyl decyl phosphite, diphenyl(2-ethylhexyl)phosphite, di(decyl)monophenyl phosphite, diphenyl tridecyl phosphite, diphenyl(C12 to C15 mixed alkyl)phosphite, phenyl diisodecyl phosphite, phenyl-bis(isotridecyl)phosphite, triethyl phosphite, tributyl phosphite, tridecyl phosphite, tris(2-ethylhexyl)phosphite, tris(decyl)phosphite, trilauryl phosphite, tris(tridecyl)phosphite, trioleyl phosphite, tristearyl phosphite, diethyl phosphite, dibutyl phosphite, dilauryl phosphite, bis(2-ethylhexyl) phosphite, dioleyl phosphite, trilauryl trithiophosphite, bis(neopentyl glycol)-1,4-cyclohexane dimethyl diphosphite, bis(2,4-di-*tert*-butylphenyl)pentaerythritol diphosphite, bis(2,6-di-*tert*-butyl-4-methylphenyl)pentaerythritol diphosphite, bis(2,4,6-tri-*tert-*butylphenyl)pentaerythritol diphosphite, bis(2,4-dicumylphenyl)pentaerythritol diphosphite, distearylpentaerythritol diphosphite, di(nonylphenyl)pentaerythritol diphosphite, di(tridecyl)pentaerythritol diphosphite, phenyl-4,4'-isopropylidene diphenol-pentaerythritol diphosphite, tetra(C12 to 15 mixed alkyl)-4,4'-isopropylidene diphenyl diphosphite, hydrogenated-4,4'-isopropylidene diphenol polyphosphite, bis(octylphenyl)·bis[4,4'-*n-*butylidene-bis(2-*tert*-butyl-5-methyl phenol)]·1,6-hexanediol diphosphite, tetra(tridecyl)-4,4'-*n*-butylidene-bis(2-*tert*-butyl-5-methylphenol)diphosphite, hexa(tridecyl)-1,1,3-tris(2-methyl-4-hydroxy-5-*tert*-butylphenyl)butane triphosphite, hexa(tridecyl)-1,1,3-tris(2-methyl-5-*tert-*butyl-4-hydroxyphenyl)butane triphosphite, 9,10-dihydro-9-oxa-10-phosphaphenanthrene-10-oxide, 2-butyl-2-ethylpropanediol·2,4,6-tri-*tert*-butylphenol monophosphite, tris[2-*tert*-butyl-4-(3-*tert*-butyl-4-hydroxy-5-methylphenylthio)-5-methylphenyl]phosphite, tetra(tridecyl)isopropylidene diphenol diphosphite, tetrakis(2,4-di-*tert-*butylphenyl)biphenylene diphosphite, tris(2-[(2,4,8,10-tetrakis-*tert-*butyldibenzo[d,*f*][1,3,2]dioxaphosphepin-6-yl)oxy]ethyl)amine, and phosphites of 2-ethyl-2-butylpropylene glycol and 2,4,6-tri-*tert*-butylphenol.

In the composition of the present invention, as the component (D), the above-exemplified phosphite compounds may be used individually, or two or more thereof may be used in combination. Among these phosphite compounds, from the standpoints of thermal stability, coloration resistance and thermal coloration resistance, it is preferred to use a phosphite compound having 12 to 80 carbon atoms, more preferably a phosphite compound having 12 to 46 carbon atoms, still more preferably a phosphite compound having 12 to 36 carbon atoms, particularly preferably a phosphite compound having 18 to 30 carbon atoms.

### <Component (E)>

From the standpoints of thermal stability, coloration resistance and thermal coloration resistance, the composition of the present invention further contains at least one phenolic antioxidant as a component (E) in an amount of preferably 5 to 200 parts by mass, more preferably 10 to 150 parts by mass, still more preferably 15 to 100 parts by mass, with respect to 100 parts by mass of the component (A).

Examples of the phenolic antioxidant of the component (E) include 2,6-di-tert-butyl-*p*-cresol, 2,6-diphenyl-4-octadecyloxyphenol, stearyl(3,5-di-tert-butyl-4-hydroxyphenyl)propionate, distearyl(3,5-di-*tert*-butyl-4-hydroxybenzyl)phosphonate, thiodiethylene glycol-bis[(3,5-di-*tert*-butyl-4-hydroxyphenyl)propionate], 1,6-hexamethylene-bis[(3,5-di-*tert*-butyl-4-hydroxyphenyl)propionate], 1,6-hexamethylene-bis[(3,5-di-*tert*-butyl-4-hydroxyphenyl)propionic acid amide], 4,4'-thiobis(6-*tert*-butyl-*m*-cresol), 2,2'-methylene-bis(4-methyl-6-*tert*-butylphenol), 2,2'-methylene-bis(4-ethyl-6-*tert*-butylphenol), bis[3,3-bis(4-hydroxy-3-*tert*-butylphenyl)butyric acid]glycol ester, 4,4'-butylidene-bis(6-*tert*-butyl-*m-*cresol), 2,2'-ethylidene-bis(4,6-di-*tert*-butylphenol), 2,2'-ethylidene-bis(4-*sec-*butyl-6-*tert-*butylphenol), 1,1,3-tris(2-methyl-4-hydroxy-5-tert-butylphenyl)butane, bis[2-*tert*-butyl-4-methyl-6-(2-hydroxy-3-*tert*-butyl-5-methylbenzyl)phenyl]terephthalate, 1,3,5-tris(2,6-dimethyl-3-hydroxy-4-*tert*-butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimethylbenzene, 1,3,5-tris[(3,5-di-*tert*-butyl-4-hydroxyphenyl)propionyloxyethyl]isocyanurate, tetrakis[methylene-3-(3',5'-di-*tert*-butyl-4'-hydroxyphenyl)propionate]methane, 2-*tert*-butyl-4-methyl-6-(2-acryloyloxy-3-*tert*-butyl-5-methylbenzyl)phenol, 3,9-bis[1,1-dimethyl-2-{(3-*tert*-butyl-4-hydroxy-5-methylphenyl)propionyloxy}ethyl]-2,4,8,10-tetraoxaspiro[5.5]undecane, triethylene glycol-bis[(3-*tert*-butyl-4-hydroxy-5-methylphenyl)propionate], and pentaerythritol tetrakis[3-(3,5-di-*tert*-butyl-4-hydroxyphenyl)propionate].

The phenolic antioxidant of the component (E) may be used individually, or two or more thereof may be used in combination. Among the above-exemplified phenolic antioxidants, from the standpoints of thermal stability, coloration resistance and thermal coloration resistance, pentaerythritol tetrakis[3-(3,5-di-*tert*-butyl-4-hydroxyphenyl)propionate] is preferred.

### <Component (F)>

From the standpoints of thermal stability, coloration resistance, thermal coloration resistance, and particularly transparency, the composition of the present invention further contains at least one sugar alcohol as a component (F) in an amount of preferably 1 to 1,000 parts by mass, more preferably 2 to 200 parts by mass, still more preferably 6 to 100 parts by mass, particularly preferably 10 to 60 parts by mass, with respect to 100 parts by mass of the component (A).

Examples of the sugar alcohol of the component (F) include mannitol, maltitol, lactitol, sorbitol, erythritol, xylitol, and inositol. The sugar alcohol of the component (F) may be used individually, or two or more thereof may be used in combination. Among these sugar alcohols, from the standpoints of thermal stability, coloration resistance, thermal coloration resistance, and particularly transparency, mannitol, maltitol, lactitol and sorbitol are preferred, and sorbitol is particularly preferred.

### <Component (G)>

From the standpoints of thermal stability, coloration resistance and thermal coloration resistance, the composition of the present invention further contains at least one hindered amine-based light stabilizer as a component (G) in an amount of preferably 5 to 200 parts by mass, more preferably 10 to 150 parts by mass, still more preferably 20 to 100 parts by mass, particularly preferably 30 to 80 parts by mass, with respect to 100 parts by mass of the component (A).

The hindered amine-based light stabilizer of the component (G) is not particularly restricted as long as it is a conventionally known hindered amine-based light stabilizer, and examples thereof include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, bis(1-octoxy-2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl) bis(tridecyl)-1,2,3,4-butanetetracarboxylate, bis(1,2,2,6,6-pentamethyl-4-piperidyl)-bis(tridecyl)-1,2,3,4-butanetetracarboxylate, bis(1,2,2,6,6-pentamethyl-4-piperidyl)-2-butyl-2-(3,5-di-*tert*-butyl-4-hydroxybenzyl)malonate, 1,2,2,6,6-pentamethyl-4-piperidyl methacrylate, poly[{6-(1,1,3,3 - tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}], 1,2,3,4-butanecarboxylic acid/2,2-bis(hydroxymethyl)-1,3-propanediol/3-hydroxy-2,2-dimethylpropanal/1,2,2,6,6-pentamethyl-4-piperidinyl ester polycondensate, bis(1,2,2,6,6-pentamethyl-4-piperidyl)=decane dioate/methyl=1,2,2,6,6-pentamethyl-4-piperidyl=sebacate mixture, 2,2,6,6-tetramethyl-4-piperidyl methacrylate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/dibromoethane polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-*tert*-octylamino-*s*-triazine polycondensate, 1,5,8,12-tetrakis[2,4-bis(*N*-butyl-*N*-(2,2,6,6-tetramethyl-4-piperidyl)amino)-*s*-triazine-6-yl]-1,5,8,12-tetraazadodecane, 1,5,8,12-tetrakis[2,4-bis(*N*-butyl-*N*-(1,2,2,6,6-pentamethyl-4-piperidyl)amino)-*s*-triazine-6-yl]-1,5,8,12-tetraazadodecane, 1,6,11-tris[2,4-bis(*N*-butyl-*N*-(2,2,6,6-tetramethyl-4-piperidyl)amino)-*s*-triazine-6-ylamino]undecane, 1,6,11-tris[2,4-bis(*N*-butyl-*N*-(1,2,2,6,6-pentamethyl-4-piperidyl)amino)-*s*-triazine-6-ylamino]undecane, 3,9-bis[1,1-dimethyl-2-{tris(2,2,6,6-tetramethyl-4-piperidyloxycarbonyl)butylcarbonyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyl)butylcarbonyloxy}ethyl]-2,4,8,10-tetraoxaspiro[5.5]undecane, bis(1-undecyloxy-2,2,6,6-tetramethylpiperidin-4-yl)carbonate, 2,2,6,6-tetramethyl-4-piperidyl hexadecanoate, and 2,2,6,6-tetramethyl-4-piperidyl octadecanoate. The hindered amine-based light stabilizer of the component (G) may be used individually, or two or more thereof may be used in combination.

Further, from the standpoints of thermal stability, coloration resistance and thermal coloration resistance, the component (G) is preferably, for example, a compound having a group represented by the following Formula (1):

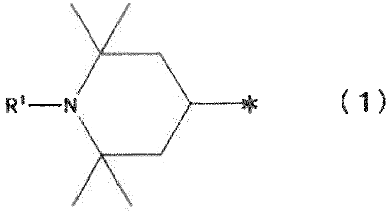

In Formula (1), R¹ represents a hydrogen atom, a hydroxy group, an alkyl group having 1 to 30 carbon atoms, an alkoxy group having 1 to 30 carbon atoms, a hydroxyalkyl group having 1 to 30 carbon atoms, a hydroxyalkoxy group having 1 to 30 carbon atoms, an alkenyl group having 2 to 30 carbon atoms, or an oxy radical, which alkyl group, alkoxy group, hydroxyalkyl group, hydroxyalkoxy group and alkenyl group are optionally interrupted by one or plural oxygen atoms and/or carbonyl groups. Further, the group of Formula (1) is bound at the position of *. The compound may contain one or plural groups of Formula (1).

The alkyl group having 1 to 30 carbon atoms, which may be represented by R¹ in Formula (1), is, for example, a linear alkyl group or a branched alkyl group. Examples of the linear alkyl group include a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, an icosyl group, a henicosyl group, a docosyl group, a tricosyl group, a tetracosyl group, a pentacosyl group, a hexacosyl group, a heptacosyl group, an octacosyl group, a nonacosyl group and a triacontyl group, and examples of the branched alkyl group include those in which one or more hydrogen atoms of the above-described linear alkyl groups are substituted with alkyl groups having 1 to 9 carbon atoms.

Examples of the alkoxy group having 1to 30 carbon atoms, which may be represented by R¹ in Formula (1), include alkoxy groups that correspond to the above-exemplified alkyl groups.

Examples of the hydroxyalkyl group having 1 to 30 carbon atoms, which may be represented by R¹ in Formula (1), include hydroxyalkyl groups that correspond to the above-exemplified alkyl groups.

Examples of the hydroxyalkoxy group having 1 to 30 carbon atoms, which may be represented by R¹ in Formula (1), include hydroxyalkoxy groups that correspond to the above-exemplified alkoxy groups.

Examples of the alkenyl group having 2 to 30 carbon atoms, which may be represented by R¹ in Formula (1), include an ethenyl group, a propenyl group, a butenyl group, a pentenyl group, a hexenyl group, a heptenyl group, an octenyl group, a nonenyl group, a decenyl group, an undecenyl group, a dodecenyl group, a tridecenyl group, a tetradecenyl group, a pentadecenyl group, a hexadecenyl group, a heptadecenyl group, an octadecenyl group, a nonadecenyl group, an icosenyl group, a heneicosenyl group, a docosenyl group, a tricosenyl group, a tetracosenyl group, a pentacosenyl group, a hexacosenyl group, a heptacosenyl group, an octacosenyl group, a nonacosenyl group, and a triacontenyl group, as well as alkadienyl groups and alkatrienyl groups.

In the group represented by Formula (1), from the standpoints of thermal stability, coloration resistance and thermal coloration resistance, R¹ is preferably a hydrogen atom or an alkyl group having 1 to 30 carbon atoms, more preferably an alkyl group having 1 to 30 carbon atoms, still more preferably an alkyl group having 1 to 4 carbon atoms, most preferably a methyl group.

Examples of the component (G) having the group represented by Formula (1) include: those in which R¹ of Formula (1) is a hydrogen atom, such as 2,2,6,6-tetramethyl-4-piperidyl stearate, 2,2,6,6-tetramethyl-4-piperidyl benzoate, bis(2,2,6,6-tetramethyl-4-piperidyl)sebacate, tetrakis(2,2,6,6-tetramethyl-4-piperidyl)-1,2,3,4-butanetetracarboxylate, bis(2,2,6,6-tetramethyl-4-piperidyl)·bis(tridecyl)-1,2,3,4-butanetetracarboxylate, poly[{6-(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}], 2,2,6,6-tetramethyl-4-piperidyl methacrylate, 1,6-bis(2,2,6,6-tetramethyl-4-piperidylamino)hexane/dibromoethane polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-*tert*-octylamino-*s*-triazine polycondensate, 1,5,8,12-tetrakis[2,4-bis(*N*-butyl-*N*-(2,2,6,6-tetramethyl-4-piperidyl)amino)-*s*-triazine-6-yl]-1,5,8,12-tetraazadodecane, 1,6,11-tris[2,4-bis(*N*-butyl-*N*-(2,2,6,6-tetramethyl-4-piperidyl)amino)-*s*-triazine-6-ylamino]undecane, 3,9-bis[1,1-dimethyl-2-{tris(2,2,6,6-tetramethyl-4-piperidyloxycarbonyl)butylcarbonyloxy}ethyl]-2,4,8,10-tetraoxaspiro[5.5]undecane, 2,2,6,6-tetramethyl-4-piperidylhexadecanoate, and 2,2,6,6-tetramethyl-4-piperidyloctadecanoate; those in which R¹ of Formula (1) is a methyl group, such as 1,2,2,6,6-pentamethyl-4-piperidyl stearate, bis(1,2,2,6,6-pentamethyl-4-piperidyl)sebacate, tetrakis(1,2,2,6,6-pentamethyl-4-piperidyl)-1,2,3,4-butanetetracarboxylate, bis(1,2,2,6,6-pentamethyl-4-piperidyl)·bis(tridecyl)-1 ,2,3,4-butanetetracarboxylate, bis(1,2,2,6,6-pentamethyl-4-piperidyl)-2-butyl-2-(3,5-di-*tert*-butyl-4-hydroxybenzyl)malonate, 1,2,2,6,6-pentamethyl-4-piperidyl methacrylate, 1,2,3,4-butanecarboxylic acid/2,2-bis(hydroxymethyl)-1,3-propanediol/3-hydroxy-2,2-dimethylpropanal/1,2,2,6,6-pentamethyl-4-piperidinyl ester polycondensate, bis(1,2,2,6,6-pentamethyl-4-piperidyl)=decanedioate/methyl=1,2,2,6,6-pentamethyl-4-piperidyl=sebacate mixture, 1,5,8,12-tetrakis[2,4-bis(*N*-butyl-*N*-(1,2,2,6,6-pentamethyl-4-piperidyl)amino)-s-triazine-6-yl]-1,5,8,12-tetraazadodecane, 1,6,11-tris[2,4-bis(*N*-butyl-*N*-(1,2,2,6,6-pentamethyl-4-piperidyl)amino)-*s*-triazine-6-ylamino]undecane, 3,9-bis[1,1-dimethyl-2-{tris(1,2,2,6,6-pentamethyl-4-piperidyloxycarbonyl)butylcarbonyloxy}ethyl]-2,4,8,10-tetraoxaspiro[5.5]undecane, 1,2,2,6,6-pentamethyl-4-piperidylhexadecanoate, and 1,2,2,6,6-pentamethyl-4-piperidyloctadecanoate; and those in which R¹ of Formula (1) is an alkoxy group having 1 to 30 carbon atoms, such as bis(1-octoxy-2,2,6,6-tetramethyl-4-piperidyl)sebacate and bis(1-undecyloxy-2,2,6,6-tetramethylpiperidin-4-yl)carbonate. Thereamong, from the standpoints of thermal stability, coloration resistance and thermal coloration resistance, a component having the group represented by Formula (1) in which R¹ is a hydrogen atom or a methyl group is preferred, and a component having the group represented by Formula (1) in which R¹ is a methyl group is more preferred.

### <Component (H)>

In the composition of the present invention, taking into consideration its thermal stability, coloration resistance and thermal coloration resistance, an organic acid barium salt may further be incorporated as a component (H). When an organic acid barium salt is incorporated, the amount thereof is preferably 5 to 700 parts by mass, more preferably 25 to 600 parts by mass, still more preferably 50 to 500 parts by mass, with respect to 100 parts by mass of the component (A).

Examples of the organic acid barium salt include barium salts of organic carboxylic acids, phenols, or organic phosphoric acids.

Examples of the organic carboxylic acids include: monovalent carboxylic acids, such as acetic acid, propionic acid, butyric acid, valeric acid, caproic acid, enanthic acid, caprylic acid, pelargonic acid, 2-ethylhexanoic acid, neodecanoic acid, capric acid, undecanoic acid, isoundecylic acid, lauric acid, isolauric acid, tridecanoic acid, myristic acid, isomyristic acid, palmitic acid, isopalmitic acid, isostearic acid, stearic acid, 12-hydroxystearic acid, behenic acid, montanoic acid, versatic acid, benzoic acid, monochlorobenzoic acid, *4-tert-*butylbenzoic acid, dimethylhydroxybenzoic acid, 3,5-di-*tert*-butyl-4-hydroxybenzoic acid, *o-*toluic acid, m-toluic acid, p-toluic acid, toluic acid, dimethylbenzoic acid, 2,4-dimethylbenzoic acid, 3,5-dimethylbenzoic acid, 2,4,6-trimethylbenzoic acid, ethylbenzoic acid, 2-ethylbenzoic acid, 3-ethylbenzoic acid, 4-ethylbenzoic acid, 2,4,6-triethylbenzoic acid, 4-isopropylbenzoic acid, n-propylbenzoic acid, aminobenzoic acid, *N,N-*dimethylaminobenzoic acid, acetoxybenzoic acid, salicylic acid, *p*-*tert*-octylsalicylic acid, elaidic acid, oleic acid, linoleic acid, linolenic acid, myristoleic acid, palmitoleic acid, eleostearic acid, eicosenoic acid, eicosadienoic acid, eicosatrienoic acid, eicosatetraenoic acid, arachidonic acid, docosapentaenoic acid, docosahexaenoic acid, ricinoleic acid, thioglycolic acid, mercaptopropionic acid, and octyl mercaptopropionic acid; divalent carboxylic acids, such as oxalic acid, malonic acid, succinic acid, glutaric acid, adipic acid, pimelic acid, suberic acid, azelaic acid, sebacic acid, phthalic acid, isophthalic acid, terephthalic acid, hydroxyphthalic acid, chlorophthalic acid, aminophthalic acid, maleic acid, fumaric acid, citraconic acid, mesaconic acid, itaconic acid, aconitic acid and thiodipropionic acid, and monoester or monoamide compounds of these divalent carboxylic acids; and di- or tri-ester compounds of trivalent or tetravalent carboxylic acids, such as butanetricarboxylic acid, butanetetracarboxylic acid, hemimellitic acid, trimellitic acid, mellophanic acid, and pyromellitic acid.

Examples of the phenols include *tert*-butyl phenol, nonyl phenol, dinonyl phenol, cyclohexyl phenol, phenyl phenol, octyl phenol, phenol, cresol, xylenol, *n*-butyl phenol, isoamyl phenol, ethyl phenol, isopropyl phenol, isooctyl phenol, 2-ethylhexyl phenol, *tert-*nonyl phenol, decyl phenol, *tert-*octyl phenol, isohexyl phenol, octadecyl phenol, diisobutyl phenol, methylpropyl phenol, diamyl phenol, methylisohexyl phenol, and methyl-*tert*-octyl phenol.

Examples of the organic phosphoric acids include mono- or di-octylphosphoric acid, mono- or di-dodecyl phosphoric acid, mono- or di-octadecyl phosphoric acid, mono- or di-(nonylphenyl)phosphoric acid, nonylphenyl phosphonate, and stearyl phosphonate.

The organic acid barium salt may be constituted by two or more organic acids. For example, in the case of a barium salt formed by monovalent organic acids, the same organic acid may constitute an anionic moiety and form a salt with divalent barium constituting a cationic moiety, or two different monovalent organic acids may each constitute an anionic moiety and form a salt with divalent barium constituting a cationic moiety.

In the composition of the present invention, the organic acid barium salt may be used individually, or two or more thereof may be used in combination. Further, the organic acid barium salt may be an acidic salt, a neutral salt, or a basic salt.

### <Component (I)>

Further, in the composition of the present invention, taking into consideration its thermal stability, coloration resistance and thermal coloration resistance, an organic acid calcium salt may further be incorporated as a component (I). When an organic acid calcium salt is incorporated, the amount thereof is preferably 5 to 700 parts by mass, more preferably 25 to 600 parts by mass, still more preferably 50 to 500 parts by mass, with respect to 100 parts by mass of the component (A).

Examples of the organic acid calcium salt include calcium salts of organic carboxylic acids, phenols, or organic phosphoric acids.

Examples of the organic carboxylic acids include the same ones as those exemplified above for barium salts. Examples of the phenols also include the same ones as those exemplified above for barium salts. Further, examples of the organic phosphoric acids include the same ones as those exemplified above for barium salts.

The organic acid calcium salt may be constituted by two or more organic acids. For example, in the case of a calcium salt formed by monovalent organic acids, the same organic acid may constitute an anionic moiety and form a salt with divalent calcium constituting a cationic moiety, or two different monovalent organic acids may each constitute an anionic moiety and form a salt with divalent calcium constituting a cationic moiety.

In the composition of the present invention, the organic acid calcium salt may be used individually, or two or more thereof may be used in combination. Further, the organic acid calcium salt may be an acidic salt, a neutral salt, or a basic salt.

### <Other>

In addition, in the composition of the present invention, taking into consideration its thermal stability, coloration resistance and thermal coloration resistance, an overbased barium carbonate may be incorporated as well.

When an overbased barium carbonate is incorporated, the amount thereof is preferably 5 to 700 parts by mass, more preferably 25 to 600 parts by mass, still more preferably 50 to 500 parts by mass, with respect to 100 parts by mass of the component (A). However, when an overbased barium carbonate is incorporated into the composition, caution should be exercised since it can cause foaming in the resulting molded body at the time of molding.

The term "overbased barium carbonate" used herein refers to a liquid overbased carboxylate-carbonate complex of barium. This complex, which is different from a simple mixture of normal barium carboxylate and barium carbonate, is formed by some sort of interaction therebetween and characteristically assumes a homogeneous liquid state in an organic solvent while having a high metal content. This complex is constituted by, as its constituents, normal barium carboxylate, barium carbonate and a complex salt of barium carboxylate and barium carbonate, and normal barium carboxylate and the complex salt of barium carboxylate and barium carbonate are centered around barium carbonate to form a so-called micelle-like structure, thereby allowing the complex to assume a homogeneous liquid state in an organic solvent. Such a liquid overbased carboxylate-carbonate complex of barium can be produced by, for example, the production method described in JP2004-238364A.

As a liquid overbased carboxylate-carbonate complex of barium, a variety of commercially available complexes can be directly used as well. Representative examples thereof include "PlastiStab^{™} 2116" (overbased barium oleate-carbonate complex: specific gravity = 1.42 to 1.53, Ba = 33 to 36%), "PlastiStab^{™} 2513" (overbased barium oleate-carbonate complex: specific gravity = 1.41 to 1.52, Ba = 33 to 36%) and "PlastiStab^{™} 2508"(overbased barium oleate-carbonate complex: specific gravity = 1.39 to 1.51, Ba = 33 to 36%), which are manufactured by AM Stabilizers Corporation, U.S.

In the composition of the present invention, these overbased barium carbonates may be used individually, or two or more thereof may be used in combination.

Moreover, in the composition of the present invention, taking into consideration its thermal stability, coloration resistance and thermal coloration resistance, an overbased calcium carbonate may be incorporated as well. When an overbased calcium carbonate is incorporated, the amount thereof is preferably 5 to 700 parts by mass, more preferably 25 to 600 parts by mass, still more preferably 50 to 500 parts by mass, with respect to 100 parts by mass of the component (A). However, when an overbased calcium carbonate is incorporated into the stabilizer composition, caution should be exercised since it can cause foaming in the resulting molded body at the time of molding.

The term "overbased calcium carbonate" used herein refers to a liquid overbased carboxylate-carbonate complex of calcium. This complex, which is different from a simple mixture of normal calcium carboxylate and calcium carbonate, is formed by some sort of interaction therebetween and characteristically assumes a homogeneous liquid state in an organic solvent while having a high metal content. This complex is constituted by, as its constituents, normal calcium carboxylate, calcium carbonate and a complex salt of calcium carboxylate and calcium carbonate, and normal calcium carboxylate and the complex salt of calcium carboxylate and calcium carbonate are centered around calcium carbonate to form a so-called micelle-like structure, thereby allowing the complex to assume a homogeneous liquid state in an organic solvent.

Such a liquid overbased carboxylate-carbonate complex of calcium can be produced in the same manner as the above-described liquid overbased carboxylate-carbonate complex of barium. Further, a variety of commercially available complexes can be directly used as well. Representative examples thereof include "PlastiStab^{™} 2265" (overbased calcium oleate-carbonate complex: specific gravity = 1.04 to 1.09, Ca = 10%) manufactured by AM Stabilizers Corporation, U.S.

In the composition of the present invention, these overbased calcium carbonates may be used individually, or two or more thereof may be used in combination.

In the composition of the present invention, taking into consideration its thermal stability, coloration resistance and thermal coloration resistance, a hydrotalcite compound may further be incorporated. When a hydrotalcite compound is incorporated, the amount thereof is preferably 10 to 500 parts by mass, more preferably 30 to 400 parts by mass, still more preferably 50 to 300 parts by mass, with respect to 100 parts by mass of the component (A). However, when a hydrotalcite compound is incorporated into the composition, caution should be exercised since it can cause foaming and stress whitening in the resulting molded body at the time of molding.

Examples of the hydrotalcite compound include compounds represented by the following Formula (2):

Mgₓ₁Znₓ₂Al₂(OH)₂ₓ₁₊₂ₓ₂₊₄(CO₃)_{1-y1/2}(ClO₄)_{y1}mH₂O (2)

In Formula (2), x1, x2 and y1 each represent a number that satisfies the conditions represented by the following equations, and m represents 0 or an arbitrary integer: 0 ≤ x2/x1 < 10, 2 ≤ (x1 + x2) < 20, and 0 ≤ y1 ≤ 2.

As the hydrotalcite compound, a complex salt compound formed by magnesium and aluminum, or a complex salt compound formed by zinc, magnesium and aluminum is preferably used. In addition, the crystal water may be dehydrated, and the compound may be treated with perchloric acid. Such a hydrotalcite compound may be a naturally-occurring or synthetic hydrotalcite. The hydrotalcite compound is not restricted in terms of crystal structure, crystal particle size and the like.

Further, as the hydrotalcite compound, one whose surface is coated with, for example, a higher fatty acid such as stearic acid, a higher fatty acid metal salt such as alkali metal oleate, a metal organic sulfonate such as alkali metal dodecylbenzenesulfonate, a higher fatty acid amide, a higher fatty acid ester or a wax, can be used as well.

In the composition of the present invention, the hydrotalcite compound may be used individually, or two or more thereof may be used in combination.

In the composition of the present invention, taking into consideration its thermal stability, coloration resistance and thermal coloration resistance, a polyhydric alcohol compound other than the sugar alcohol of the component (F) may further be incorporated. When a polyhydric alcohol compound is incorporated, the amount thereof is preferably 0.01 to 100 parts by mass, more preferably 0.1 to 75 parts by mass, still more preferably 1 to 50 parts by mass, with respect to 100 parts by mass of the component (A).

Examples of the polyhydric alcohol compound include pentaerythritol, dipentaerythritol, tripentaerythritol, polypentaerythritol, neopentyl glycol, trimethylolpropane, ditrimethylolpropane, 1,3,5-tris(2-hydroxyethyl)isocyanurate, polyethylene glycol, glycerin, diglycerin, xylose, sucrose, trehalose, inositol, fructose, maltose, and lactose. These polyhydric alcohol compounds may be used individually, or two or more thereof may be used in combination.

The composition of the present invention may also contain a solvent within a range that does impair the effects of the present invention. From the standpoint of the solubility of the stabilizer components, the solvent is preferably an organic solvent, more preferably an organic solvent having a boiling point of 100°C or higher, still more preferably an organic solvent having a boiling point of 120°C or higher, particularly preferably an organic solvent having a boiling point of 150°C or higher. Preferred examples of the organic solvent include: alcohol-based organic solvents, such as 3-methoxy-*n*-butanol, 2-ethylhexanol, undecanol, and tridecanol; glycol-based organic solvents, such as methyl diglycol, butyl diglycol, and methylpropylene glycol; liquid paraffin; naphthene-based solvents; normal paraffin-based solvents; isoparaffin-based solvents; and hydrocarbon-based solvents, such as aliphatic hydrocarbon solvents, aromatic hydrocarbon solvents, and mineral oil. These solvents may be used individually, or two or more thereof may be used in combination.

When a solvent is used, the amount thereof is preferably 5 to 700 parts by mass, more preferably 10 to 600 parts by mass, still more preferably 15 to 500 parts by mass, with respect to 100 parts by mass of the component (A).

The stabilizer composition of the present invention can be suitably blended into a vinyl chloride resin to be used as a vinyl chloride resin composition.

In order to obtain the composition of the present invention, the indispensable components (A) and (B) and, as required, preferred optional components (C) to (I) and components that may be incorporated as required, as well as a solvent can be mixed together, and a variety of mixing machines can be employed for the mixing. These components may be heated during the mixing. Examples of the mixing machines that can be employed include tumbler mixers, Henschel mixers, ribbon blenders, V-type mixers, W-type mixers, super mixers, and Nauta mixers. Further, the above-described components may be directly blended with a vinyl chloride resin individually, or simultaneously in combination of two or more thereof, to prepare a vinyl chloride resin composition.

### <2. Vinyl Chloride Resin Composition>

Next, a vinyl chloride resin composition will be described.

The vinyl chloride resin composition of the present invention contains a vinyl chloride resin and the stabilizer composition of the present invention.

The vinyl chloride resin is not particularly restricted in terms of its polymerization method such as bulk polymerization, solution polymerization, suspension polymerization, or emulsion polymerization, and examples of the vinyl chloride resin include: vinyl chloride resins, such as polyvinyl chloride, chlorinated polyvinyl chloride, polyvinylidene chloride, chlorinated polyethylene, vinyl chloride-vinyl acetate copolymers, vinyl chloride-ethylene copolymers, vinyl chloride-propylene copolymers, vinyl chloride-styrene copolymers, vinyl chloride-isobutylene copolymers, vinyl chloride-vinylidene chloride copolymers, vinyl chloride-styrene-maleic anhydride ternary copolymers, vinyl chloride-styrene-acrylonitrile copolymers, vinyl chloride-butadiene copolymers, vinyl chloride-isoprene copolymers, vinyl chloride-chlorinated propylene copolymers, vinyl chloride-vinylidene chloride-vinyl acetate ternary copolymers, vinyl chloride-maleic acid ester copolymers, vinyl chloride-methacrylic acid ester copolymers, vinyl chloride-acrylonitrile copolymers, and copolymers of vinyl chloride and various vinyl ethers; blend products of these resins; and blend products, block copolymers, graft copolymers and the like that are formed by any of the above-described vinyl chloride resins with other chlorine-free synthetic resin such as an acrylonitrile-styrene copolymer, an acrylonitrile-butadiene-styrene copolymer, an ethylene-vinyl acetate copolymer, an ethylene-ethyl (meth)acrylate copolymer, or a polyester. These vinyl chloride resins may be in the form of a mixture of two or more thereof, or a mixture with other synthetic resin. From the standpoints of thermal stability, coloration resistance and thermal coloration resistance, the vinyl chloride resin to be used is preferably a polyvinyl chloride.

When the composition of the present invention is added to a vinyl chloride resin, it is preferred to further add a lubricant in consideration of the workability. The lubricant may be incorporated into the composition before adding the composition to the vinyl chloride resin. Examples of the lubricant include: hydrocarbon-based lubricants, such as low-molecular-weight waxes, paraffin waxes, polyethylene waxes, chlorinated hydrocarbons, and fluorocarbons; natural wax-based lubricants, such as carnauba wax and candelilla wax; fatty acid-based lubricants, such as higher fatty acids (e.g., lauric acid, stearic acid, and behenic acid) and oxy fatty acids (e.g., hydroxystearic acid); aliphatic amide-based lubricants, such as aliphatic amide compounds (e.g., stearylamide, laurylamide, and oleylamide) and alkylene bis-aliphatic amides (e.g., methylene bis-stearylamide and ethylene bis-stearylamide); fatty acid alcohol ester-based lubricants, such as fatty acid monohydric alcohol ester compounds (e.g., stearyl stearate, butyl stearate, and distearyl phthalate), fatty acid polyhydric alcohol ester compounds (e.g., glycerin tristearate, sorbitan tristearate, pentaerythritol tetrastearate, dipentaerythritol hexastearate, polyglycerin polyricinoleate, and hardened castor oil), and complex ester compounds composed of a monovalent fatty acid, a polybasic organic acid and a polyhydric alcohol (e.g., adipic acid-stearic acid ester of dipentaerythritol); aliphatic alcohol-based lubricants, such as stearyl alcohol, lauryl alcohol, and palmityl alcohol; metallic soaps; montanoic acid-based lubricants, such as partially-saponified montanoic acid esters; acrylic lubricants; and silicone oils. These lubricants may be used individually, or two or more thereof may be used in combination.

When a lubricant is added, the amount thereof is preferably 0.01 to 5.0 parts by mass with respect to 100 parts by mass of the vinyl chloride resin and, from the standpoint of the workability, it is more preferably 0.05 to 4.0 parts by mass, still more preferably 0.1 to 3.0 parts by mass.

When the composition of the present invention is added to a vinyl chloride resin, it is preferred to further add a processing aid in consideration of the workability. The processing aid may be incorporated into the composition of the present invention before adding the composition to the vinyl chloride resin. The processing aid can be selected as appropriate from known processing aids. Examples of the processing aid include: homopolymers or copolymers of alkyl methacrylates such as methyl methacrylate, ethyl methacrylate, and butyl methacrylate; copolymers of any of the above-described alkyl methacrylates and an alkyl acrylate such as methyl acrylate, ethyl acrylate, or butyl acrylate; copolymers of any of the above-described alkyl methacrylates and an aromatic vinyl compound such as styrene, *α-*methylstyrene, or vinyl toluene; and copolymers of any of the above-described alkyl methacrylates and a vinylcyan compound such as acrylonitrile or methacrylonitrile. These processing aids may be used individually, or two or more thereof may be used in combination.

When a processing aid is added, the amount thereof is preferably 0.01 to 10 parts by mass, more preferably 0.05 to 5 parts by mass, with respect to 100 parts by mass of the vinyl chloride resin.

In addition to the composition of the present invention, other additives that are usually used in vinyl chloride resins, such as a sulfur-based antioxidant, an epoxy compound other than the component (B), a plasticizer, an ultraviolet absorber, an impact modifier, a reinforcing material, a filler, a zeolite compound, a perchlorate, an organic acid magnesium salt, an overbased magnesium carbonate, a foaming agent, a flame retardant and a flame retardant aid, may also be added to the vinyl chloride resin within a range that does not impair the effects of the present invention. These additives may be incorporated into the composition before adding the composition to the vinyl chloride resin.

Examples of the sulfur-based antioxidant include: dialkyl thiodipropionates, such as dilauryl thiodipropionate, dimyristyl thiodipropionate, myristylstearyl thiodipropionate, and distearyl thiodipropionate; and *β*-alkylmercaptopropionates of polyols, such as pentaerythritol-tetra(*β*-dodecylmercaptopropionate). These sulfur-based antioxidants may be used individually, or two or more thereof may be used in combination.

Examples of the epoxy compound other than the component (B) of the present invention include: epoxidized vegetable oils, such as epoxidized soybean oil, epoxidized linseed oil, epoxidized tung oil, epoxidized castor oil, and epoxidized safflower oil. These epoxidized vegetable oils may be used individually, or two or more thereof may be used in combination.

Examples of the plasticizer include: phthalate-based plasticizers, such as dibutyl phthalate, butylhexyl phthalate, diheptyl phthalate, dioctyl phthalate, diisononyl phthalate, diisodecyl phthalate, dilauryl phthalate, dicyclohexyl phthalate, and dioctyl terephthalate; adipate-based plasticizers, such as dioctyl adipate, diisononyl adipate, diisodecyl adipate, and di(butyl diglycol)adipate; phosphate-based plasticizers, such as triphenyl phosphate, tricresyl phosphate, trixylenyl phosphate, tri(isopropylphenyl)phosphate, triethyl phosphate, tributyl phosphate, trioctyl phosphate, tri(butoxyethyl)phosphate, and octyldiphenyl phosphate; polyester-based plasticizers in which a polyhydric alcohol (e.g., ethylene glycol, diethylene glycol, triethylene glycol, 1,2-propylene glycol, 1,3-propylene glycol, 1,3-butanediol, 1,4-butanediol, 1,5-hexanediol, 1,6-hexanediol, or neopentyl glycol) and a dibasic acid (e.g., oxalic acid, malonic acid, succinic acid, glutaric acid, adipic acid, pimelic acid, suberic acid, azelaic acid, sebacic acid, phthalic acid, isophthalic acid, or terephthalic acid) are used along with, as required, a monohydric alcohol or a monocarboxylic acid as a stopper; tetrahydrophthalic acid-based plasticizers; azelaic acid-based plasticizers; sebacic acid-based plasticizers; stearic acid-based plasticizers; citric acid-based plasticizers; trimellitic acid-based plasticizers; pyromellitic acid-based plasticizers; and biphenylene polycarboxylic acid-based plasticizers. These plasticizers may be used individually, or two or more thereof may be used in combination.

Examples of the ultraviolet absorber include 2-hydroxybenzophenones, such as 2,4-dihydroxybenzophenone, 2-hydroxy-4-methoxybenzophenone, 2-hydroxy-4-octoxybenzophenone, and 5,5'-methylene-bis(2-hydroxy-4-methoxybenzophenone); 2-(2-hydroxyphenyl)benzotriazoles, such as 2-(2-hydroxy-5-methylphenyl)benzotriazole, 2-(2-hydroxy-5-tert-octylphenyl)benzotriazole, 2-(2-hydroxy-3,5-di-*tert*-butylphenyl)-5-chlorobenzotriazole, 2-(2-hydroxy-3-*tert*-butyl-5-methylphenyl)-5-chlorobenzotriazole, 2-(2-hydroxy-3,5-dicumylphenyl)benzotriazole, 2,2'-methylene-bis(4-*tert*-octyl-6-benzotriazolyl phenol), and polyethylene glycol ester of 2-(2-hydroxy-3-tert-butyl-5-carboxyphenyl)benzotriazole; benzoates, such as phenyl salicylate, resorcinol monobenzoate, 2,4-di-*tert*-butylphenyl-3,5-di-*tert*-butyl-4-hydroxybenzoate,2,4-di-*tert*-amylphenyl-3,5-di-*tert*-butyl-4-hydroxybenzoate, and hexadecyl-3,5-di-*tert*-butyl-4-hydroxybenzoate; substituted oxanilides, such as 2-ethyl-2'-ethoxyoxanilide and 2-ethoxy-4'-dodecyloxanilide; cyanoacrylates, such as ethyl-*α*-cyano-*β*,*β*-dipheny| acrylate and methyl-2-cyano-3-methyl-3-(p-methoxyphenyl)acrylate; and triaryltriazines, such as 2-(2-hydroxy-4-octoxyphenyl)-4,6-bis(2,4-di-*tert*-butylphenyl)-*s*-triazine, 2-(2-hydroxy-4-methoxyphenyl)-4,6-diphenyl-*s-*triazine, and 2-(2-hydroxy-4-propoxy-5-methylphenyl)-4,6-bis(2,4-di-*tert*-butylphenyl)-s-triazine. These ultraviolet absorbers may be used individually, or two or more thereof may be used in combination.

Examples of the impact modifier include polybutadienes, polyisoprenes, polychloroprenes, fluororubbers, styrene-butadiene-based copolymer rubbers, methyl methacrylate-butadiene-styrene-based copolymers, methyl methacrylate-butadiene-styrene-based graft copolymers, acrylonitrile-styrene-butadiene-based copolymer rubbers, acrylonitrile-styrene-butadiene-based graft copolymers, styrene-butadiene-styrene block copolymer rubbers, styrene-isoprene-styrene copolymer rubbers, styrene-ethylene-butylene-styrene copolymer rubbers, ethylene-propylene copolymer rubbers, ethylene-propylene-diene copolymer rubbers (EPDM), silicone-containing acrylic rubbers, silicone/acryl composite rubber-based graft copolymers, and silicone-based rubbers. Examples of a diene in the above-described ethylene-propylene-diene copolymer rubbers (EPDM) include 1,4-hexanediene, dicyclopentadiene, methylene norbornene, ethylidene norbornene, and propenyl norbornene. These impact modifiers may be used individually, or two or more thereof may be used in combination.

As the reinforcing material, a fiber-form, plate-form, particle-form or powder-form reinforcing material that is usually used for reinforcement of a synthetic resin can be used. Specific examples thereof include: inorganic fibrous reinforcing materials, such as glass fibers, asbestos fibers, carbon fibers, graphite fibers, metal fibers, potassium titanate whiskers, aluminum borate whiskers, magnesium-based whiskers, silicon-based whiskers, wollastonite, sepiolite, asbestos, slag fibers, zonolite, ellestadite, gypsum fibers, silica fibers, silica-alumina fibers, zirconia fibers, boron nitride fibers, silicon nitride fibers, and boron fibers; organic fibrous reinforcing materials, such as polyester fibers, nylon fibers, acrylic fibers, regenerated cellulose fibers, acetate fibers, kenaf, ramie, cotton, jute, hemp, sisal, flax, linen, silk, Manila hemp, sugarcane, wood pulp, wastepaper, recycled wastepaper, and wool; and plate-form and particle-form reinforcing materials, such as glass flake, non-swelling mica, graphites, metal foils, ceramic beads, clay, mica, sericite, zeolite, bentonite, dolomite, kaolin, fine powder silicic acid, feldspar powder, potassium titanate, shirasu balloon, calcium carbonate, magnesium carbonate, barium sulfate, calcium oxide, aluminum oxide, titanium oxide, aluminum silicate, silicon oxide, gypsum, novaculite, dawsonite, and white clay. These reinforcing materials may be coated or bundled with a thermoplastic resin such as an ethylene/vinyl acetate copolymer or a thermosetting resin such as an epoxy resin, or may be treated with a coupling agent such as aminosilane or epoxysilane. These reinforcing materials may be used individually, or two or more thereof may be used in combination.

Examples of the filler include calcium carbonate, calcium oxide, calcium hydroxide, zinc hydroxide, zinc carbonate, zinc sulfide, magnesium oxide, magnesium hydroxide, magnesium carbonate, aluminum oxide, aluminum hydroxide, metal silicates (e.g., sodium aluminosilicate, hydrocalumite, aluminum silicate, magnesium silicate, calcium silicate, and zeolite), activated clay, talc, clay, red iron oxide, asbestos, antimony trioxide, silica, glass beads, mica, sericite, glass flake, wollastonite, potassium titanate, PMF, gypsum fibers, zonolite, MOS, phosphate fibers, glass fibers, carbon fibers, and aramid fibers. These fillers may be used individually, or two or more thereof may be used in combination.

The zeolite compound is an aluminosilicate of alkali or alkaline earth metal which has a unique three-dimensional zeolite crystal structure, and representative examples thereof include A-type, X-type, Y-type and P-type zeolites, monodenite, analcite, sodalite-family aluminosilicates, clinoptilolite, erionite, and chabazite. These zeolite compounds may each be either a hydrate containing crystal water (so-called zeolite water) or an anhydride in which the crystal water is removed, and a zeolite compound having a particle size of 0.1 to 50 µm, particularly preferably 0.5 to 10 µm, can be used. The above-described zeolite compounds may be used individually, or two or more thereof may be used in combination.

Examples of the perchlorate include metal perchlorates, ammonium perchlorate, and perchloric acid-treated silicates. Examples of the metals constituting these metal salts include lithium, sodium, potassium, calcium, magnesium, strontium, barium, zinc, cadmium, lead, and aluminum. The metal perchlorates may be anhydrides or hydrate salts, and may be dissolved in an alcohol-based or ester-based solvent such as butyl diglycol or butyl diglycol adipate), or dehydrated products thereof. These perchlorates may be used individually, or two or more thereof may be used in combination.

Examples of the organic acid magnesium salt include magnesium salts of organic carboxylic acids, phenols, or organic phosphoric acids.

Examples of the organic carboxylic acids include the same ones as those exemplified above for organic acid barium salt. Examples of the phenols also include the same ones as those exemplified above for organic acid barium salt. Moreover, examples of the organic phosphoric acids include the same ones as those exemplified above for organic acid barium salt. The organic acid magnesium salt may be constituted by two or more organic acids. For example, in the case of a magnesium salt formed by monovalent organic acids, the same organic acid may constitute an anionic moiety and form a salt with divalent calcium constituting a cationic moiety, or two different monovalent organic acids may each constitute an anionic moiety and form a salt with divalent magnesium constituting a cationic moiety. Such an organic acid magnesium salt may be used individually, or two or more thereof may be used in combination. Further, the organic acid magnesium salt may be an acidic salt, a neutral salt, or a basic salt.

The term "overbased magnesium carbonate" used herein refers to a liquid overbased carboxylate-carbonate complex of magnesium. This complex, which is different from a simple mixture of normal magnesium carboxylate and magnesium carbonate, is formed by some sort of interaction therebetween and characteristically assumes a homogeneous liquid state in an organic solvent while having a high metal content. This complex is constituted by, as its constituents, normal magnesium carboxylate, magnesium carbonate and a complex salt of magnesium carboxylate and magnesium carbonate, and normal magnesium carboxylate and the complex salt of magnesium carboxylate and magnesium carbonate are centered around magnesium carbonate to form a so-called micelle-like structure, thereby allowing the complex to assume a homogeneous liquid state in an organic solvent.

Such a liquid overbased carboxylate-carbonate complex of magnesium can be produced in the same manner as the above-described liquid overbased carboxylate-carbonate complex of barium. Further, commercially available complexes can be directly used as well. These overbased magnesium carbonates may be used individually, or two or more thereof may be used in combination.

Examples of the foaming agent include: degradable organic foaming agents, such as azodicarbonamide, azobisisobutyronitrile, *p*,*p*'-oxybis-benzenesulfonylhydrazide, *n,n'-*dinitrosopentamethylenetetramine, *p*-toluenesulfonylsemicarbazide, and trihydrazotriazine; and degradable inorganic foaming agents, such as sodium bicarbonate, ammonium carbonate, ammonium bicarbonate, ammonium nitrite, azide compounds, and sodium borohydride. These foaming agents may be used individually, or two or more thereof may be used in combination.

Examples of the flame retardant and the flame retardant aid include triazine ring-containing compounds, metal hydroxides, other inorganic phosphorus compounds, halogen-based flame retardants, silicon-based flame retardants, phosphate-based flame retardants, condensed phosphate-based flame retardants, intumescent flame retardants, antimony oxides such as antimony trioxide, and other inorganic flame retardant aids and organic flame retardant aids.

Examples of the triazine ring-containing compound include melamine, ammeline, benzoguanamine, acetoguanamine, phthalodiguanamine, melamine cyanurate, melamine pyrophosphate, butylene diguanamine, norbornene diguanamine, methylene diguanamine, ethylene dimelamine, trimethylene dimelamine, tetramethylene dimelamine, hexamethylene dimelamine, and 1,3-hexylene dimelamine.

Examples of the metal hydroxide include magnesium hydroxide, aluminum hydroxide, calcium hydroxide, barium hydroxide, zinc hydroxide, and KISUMA 5A (magnesium hydroxide, manufactured by Kyowa Chemical Industry Co., Ltd.).

Examples of the phosphate-based flame retardant include trimethyl phosphate, triethyl phosphate, tributyl phosphate, tributoxyethyl phosphate, trischloroethyl phosphate, trisdichloropropyl phosphate, triphenyl phosphate, tricresyl phosphate, cresyldiphenyl phosphate, trixylenyl phosphate, octyldiphenyl phosphate, xylenyldiphenyl phosphate, tris(isopropylphenyl)phosphate, 2-ethylhexyldiphenyl phosphate, *t*-butylphenyldiphenyl phosphate, bis(*t*-butylphenyl)phenyl phosphate, tris(*t*-butylphenyl)phosphate, isopropylphenyldiphenyl phosphate, b*is(isopropylphenyl)diphenyl phosphate, and tris(isopropylpheny l)phosphate.

Examples of the condensed phosphate-based flame retardant include 1,3-phenylene-bis(diphenylphosphate), 1,3-phenylene-bis(dixylenylphosphate), and bisphenol A-bis(diphenyl phosphate).

Examples of the intumescent-based flame retardant include ammonium salts and amine salts of (poly)phosphoric acid, such as ammonium polyphosphate, melamine polyphosphate, piperazine polyphosphate, ammonium pyrophosphate, melamine pyrophosphate, and piperazine pyrophosphate.

Examples of other inorganic flame retardant aids include inorganic compounds, such as titanium oxide, aluminum oxide, magnesium oxide, and talc; and surface-treated products thereof. For example, a variety of commercially available products, such as TIPAQUE R-680 (titanium oxide: manufactured by Ishihara Sangyo Kaisha, Ltd.) and KYOWAMAG 150 (magnesium oxide: manufactured by Kyowa Chemical Industry Co., Ltd.), can be used. These flame retardants and flame retardant aids may be used individually, or two or more thereof may be used in combination.

Further, in addition to the composition of the present invention, a stabilization aid that is usually used in vinyl chloride resins may be added within a range that does not impair the effects of the composition of the present invention. As the stabilization aid, for example, diphenylthiourea, anilinodithiotriazine, melamine, benzoic acid, cinnamic acid, or *p-tert-*butylbenzoic acid can be used. Moreover, as required, additives that are usually used in vinyl chloride resins, examples of which include a cross-linking agent, an antistatic agent, an anti-fogging agent, a plate-out inhibitor, a surface treatment agent, a fluorescent agent, an antifungal agent, an antibacterial agent, a metal inactivator, a mold release agent, and a pigment such as white pigment (e.g., titanium dioxide) or blue pigment (e.g., ultramarine blue or phthalocyanine blue), may be incorporated within a range that does not impair the effects of the present invention. These optional components may be used individually, or two or more thereof may be used in combination. These stabilization aid and optional components may be incorporated into the composition of the present invention before adding the composition to the vinyl chloride resin.

Among metallic stabilizers that are used in vinyl chloride resins, it is not preferred from the standpoints of the environmental effects and the toxicity to add a lead-based stabilizer, a (organic) tin-based stabilizer, or a cadmium-based stabilizer.

The resin composition of the present invention contains a vinyl chloride resin and the composition of the present invention. In this vinyl chloride resin composition, the content of the composition of the present invention is preferably 0.3 to 15.0 parts by mass, more preferably 0.3 to 10.0 parts by mass, still more preferably 0.5 to 8.0 parts by mass, yet still more preferably 0.8 to 6.0 parts by mass, with respect to 100 parts by mass of the vinyl chloride resin.

In the vinyl chloride resin composition of the present invention, in addition to the composition of the present invention, the above-described lubricant and processing aid as well as other additives that are usually used in vinyl chloride resins may be incorporated within a range that does not impair the effects of the present invention.

The resin composition of the present invention can be molded by a known molding method, such as roll processing, extrusion molding, melt casting, press molding, injection molding, or calender molding.

### <3. Molded Body>

The molded body of the present invention is obtained from the vinyl chloride resin composition of the present invention. Molded bodies obtained from the resin composition of the present invention can be utilized in piping materials, such as pipes, joints, and piping parts; building and structural materials, such as wall materials, flooring materials, window frames, corrugated boards, and gutters; interior and exterior materials for automobiles; electric wire coating materials; agricultural materials; food packaging materials; and products, such as miscellaneous goods (e.g., packings, gaskets, hoses, sheets, trays, bottles, and toys), daily necessaries, stationery, decorative panels, industrial boards, and IC casings.

The resin composition of the present invention is particularly suitable for transparent molded articles of hard or semi-hard applications, and can be used in applications that require glass-like transparency, such as containers, industrial boards, decorative panels, trays, films, shrink films, sheets, building materials, water supply/drainage pipes, plates, joints, automobile materials, hoses, IC casings, and bottles.

With regard to the transparency of the molded body, the haze value (the degree of cloudiness) at a thickness of 6 mm is preferably 20.0 or lower, more preferably 15.0 or lower, still more preferably 10.0 or lower, yet still more preferably 7.0 or lower, yet still more preferably 6.0 or lower. The haze value can be measured in accordance with JIS K7136.

### EXAMPLES

The present invention will now be described concretely by way of Examples thereof. It is noted here, however, that the present invention is not restricted to the below-described Examples by any means.

### [Production of Stabilizer Compositions]

Stabilizer compositions were prepared by blending various components in accordance with the respective formulations shown in Tables 1 to 12. As the epoxy compound of the component (B), the below-described epoxy compounds 1 to 8 were used. It is noted here that the below-described epoxidized soybean oil was used in compositions 73 to 80.
Epoxy compound 1: hydrogenated bisphenol A diglycidyl ether (oxirane oxygen concentration = 7.4% by mass)
Epoxy compound 2: bisphenol A diglycidyl ether (oxirane oxygen concentration = 8.4% by mass)
Epoxy compound 3: trimethylolpropane triglycidyl ether (oxirane oxygen concentration = 10.7% by mass)
Epoxy compound 4: neopentyl glycol diglycidyl ether (oxirane oxygen concentration = 11.4% by mass)
Epoxy compound 5: cresyl glycidyl ether (oxirane oxygen concentration = 8.9% by mass)
Epoxy compound 6: polypropylene glycol diglycidyl ether (oxirane oxygen concentration = 5.3% by mass)
Epoxy compound 7: alkyl glycidyl ether having 12 to 13 carbon atoms (oxirane oxygen concentration = 5.0% by mass)
Epoxy compound 8: 2-phenylphenol glycidyl ether (oxirane oxygen concentration = 7.1% by mass)
Comparative epoxy compound: epoxidized soybean oil (oxirane oxygen concentration = 6.7% by mass)

### [Examples 1 to 84 and Comparative Examples 1 to 10]

Vinyl chloride resin compositions were obtained by blending a vinyl chloride resin with a composition and other additives in accordance with the respective formulations shown in Tables 13 to 27 using a Henschel mixer. The thus obtained vinyl chloride resin compositions were each calender-molded to produce sheets. The roll kneading conditions were set as 165°C × 30 rpm × 0.6 mm. The dynamic thermal stability, the static thermal stability, the coloration resistance, the thermal coloration resistance, and the transparency of each of the thus obtained sheets were evaluated by the below-described test methods. The evaluation results are shown together in Tables 13 to 27.

### <Dynamic Thermal Stability Test>

Each resin composition was added to a LABO-PLASTOMILL tester (model 4C150, manufactured by Toyo Seiki Seisaku-sho, Ltd.) in an amount of 65 g/60 cc under the kneading conditions of 190°C and 40 rpm, and the degradation time, which is a period of from degradation of the resin to an increase in the kneading torque, was measured. The results thereof are shown together in Tables 13 to 27. A longer degradation time is regarded as superior thermal stability.

### <Static Thermal Stability Test>

The above-obtained sheets were each placed in gear ovens set at 190°C and 200°C, and the blackening time (minutes) was measured. The results thereof are shown together in Tables 13 to 27. A longer blackening time is regarded as superior thermal stability.

### <Coloration Resistance Test>

The above-obtained sheets of 0.6 mm in thickness were each pasted together and then pressed at 190°C for 5 minutes to produce a sheet of 1 mm in thickness. The yellowness (Y.I. value) of this sheet was measured in accordance with JIS K7373. The results thereof are shown together in Tables 13 to 27. It is regarded that a smaller yellowness value means less coloration and thus superior coloration resistance with limited initial coloration.

### <Thermal Coloration Resistance Test>

The above-obtained sheets of 0.6 mm in thickness were each pasted together and pressed at 190°C for 15 minutes to produce a sheet of 1 mm in thickness. Further, the above-obtained sheets of 0.6 mm in thickness were each pasted together and pressed at 190°C for 45 minutes to produce a sheet of 1 mm in thickness. For these sheets, the yellowness (Y.I. value) was measured in accordance with JIS K7373. The results thereof are shown together in Tables 13 to 27. It is regarded that a smaller yellowness value means less coloration and thus superior thermal coloration resistance. The larger the yellowness value, the inferior the thermal coloration resistance, and a sheet with even more inferior thermal heat resistance was blackened.

### <Transparency Test>

For each 6 mm-thick sheet pressed at 180°C for 5 minutes, the haze value was measured in accordance with JIS K7136 using Haze Guard II (manufactured by Toyo Seiki Seisaku-sho, Ltd.). The results thereof are shown together in Tables 13 to 27.

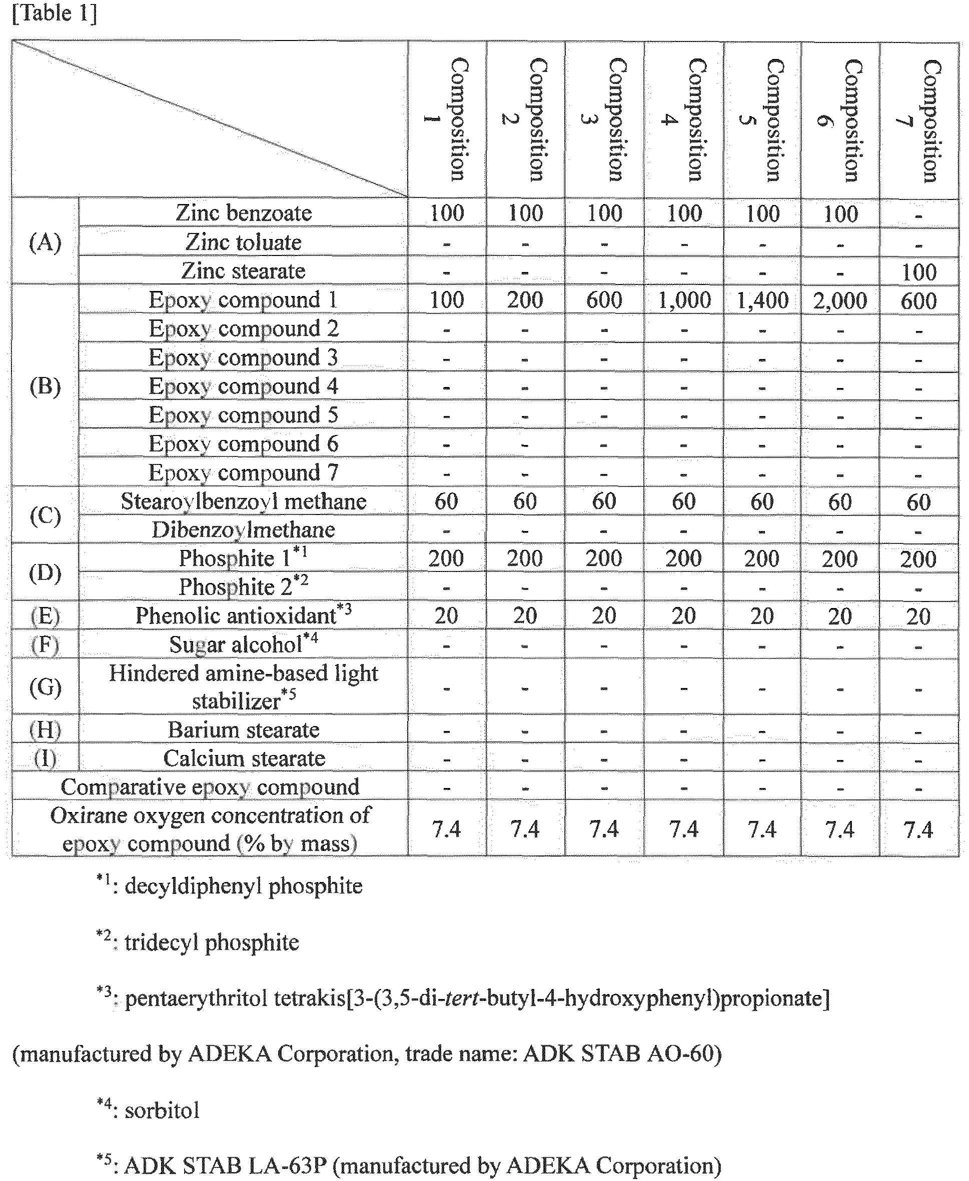

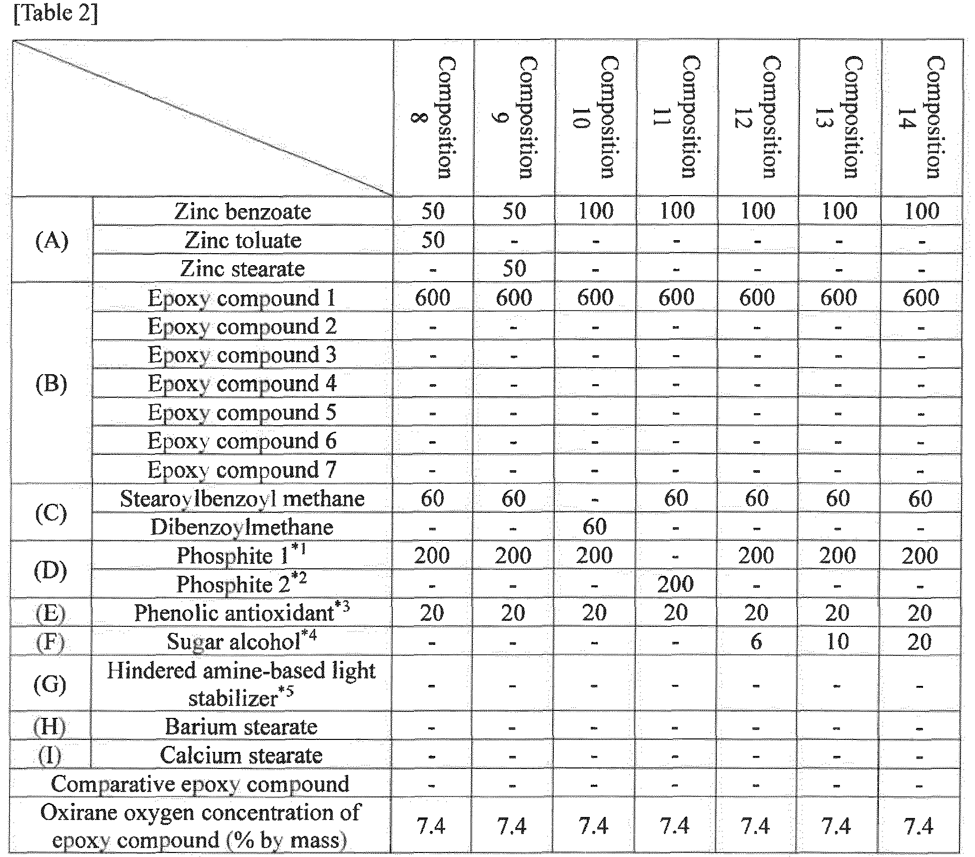

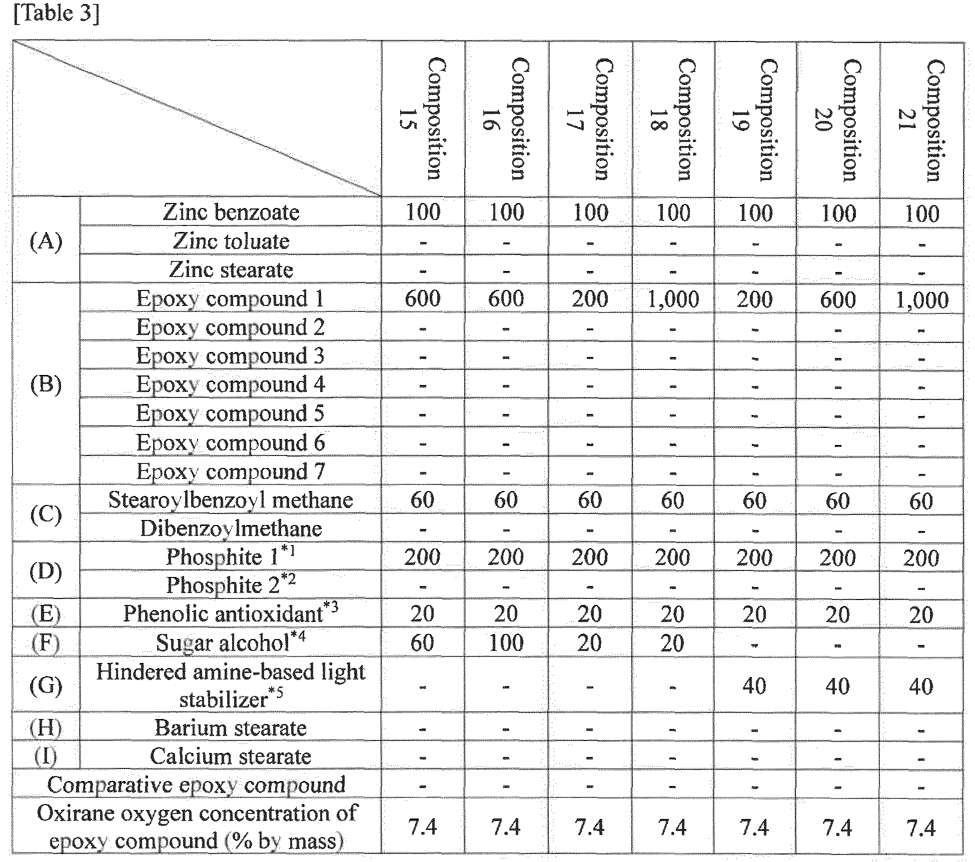

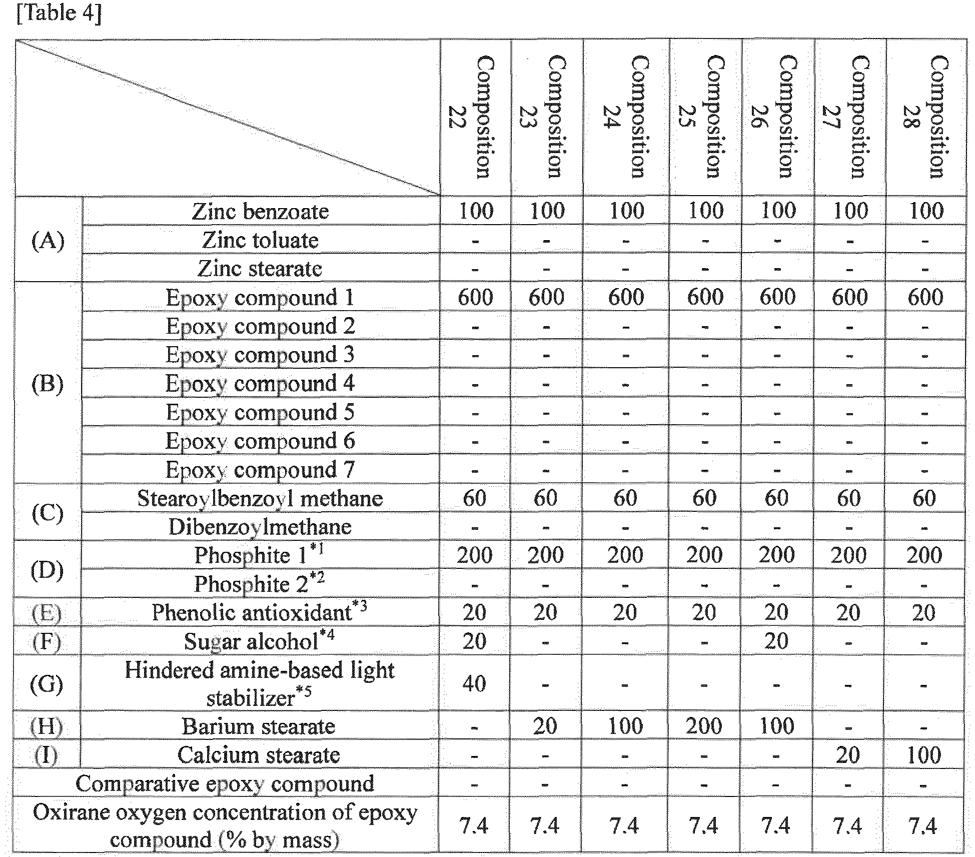

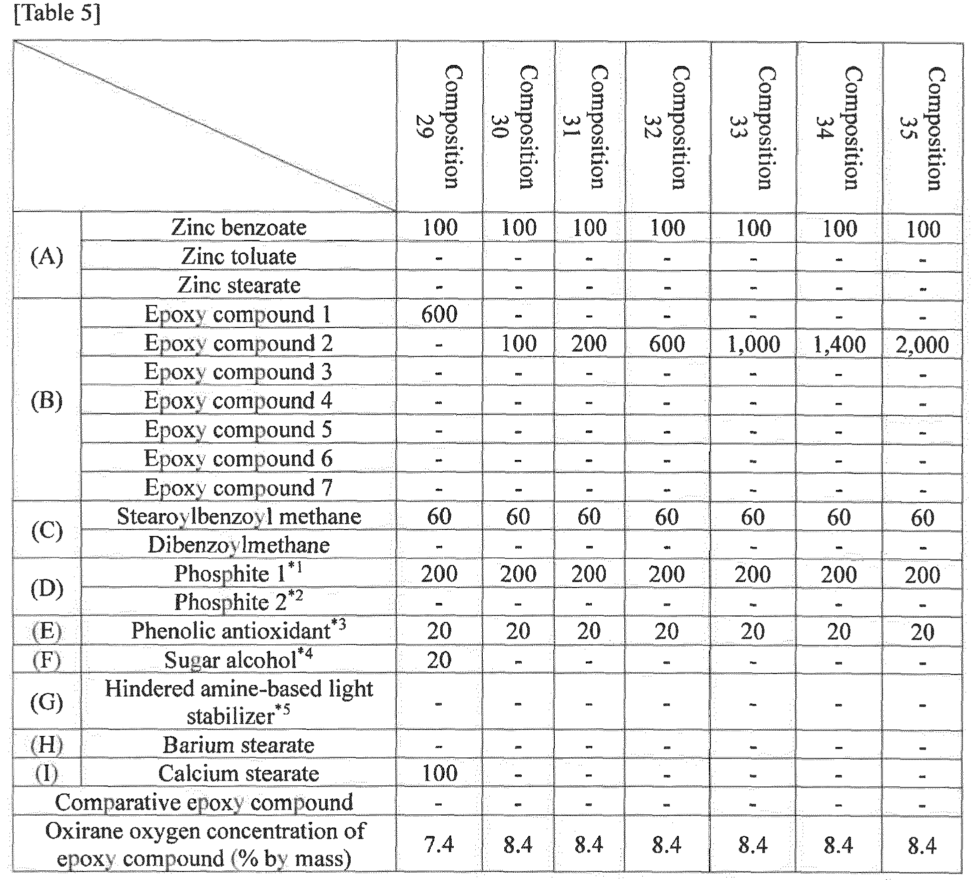

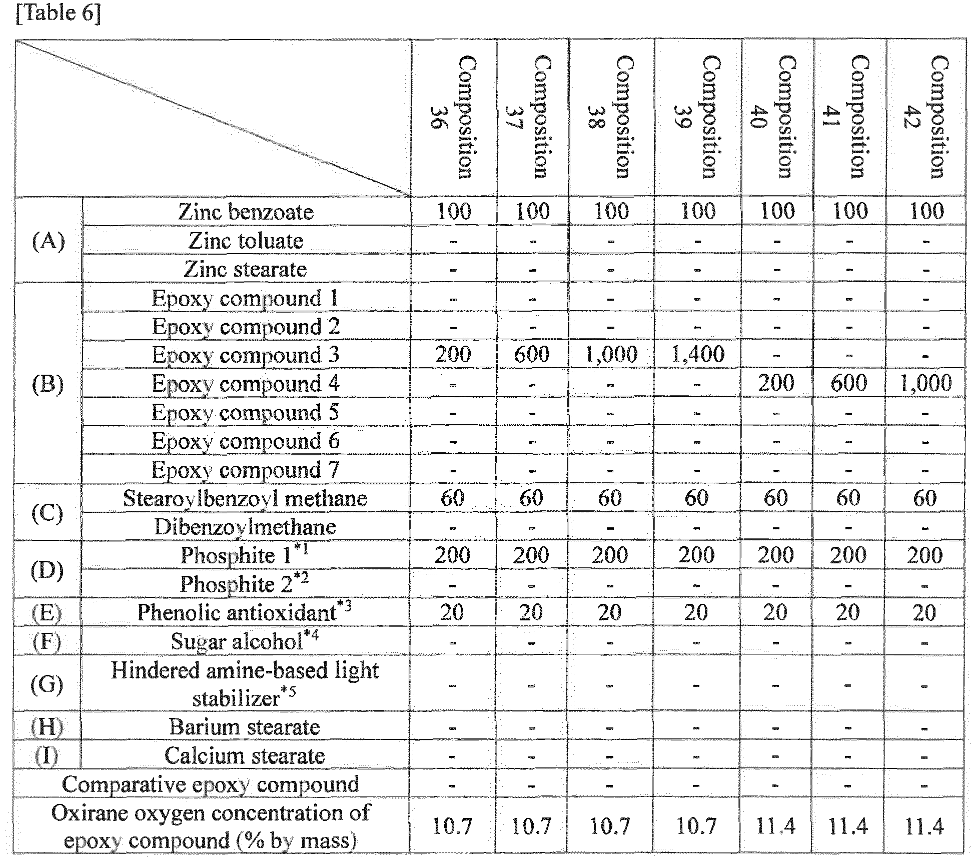

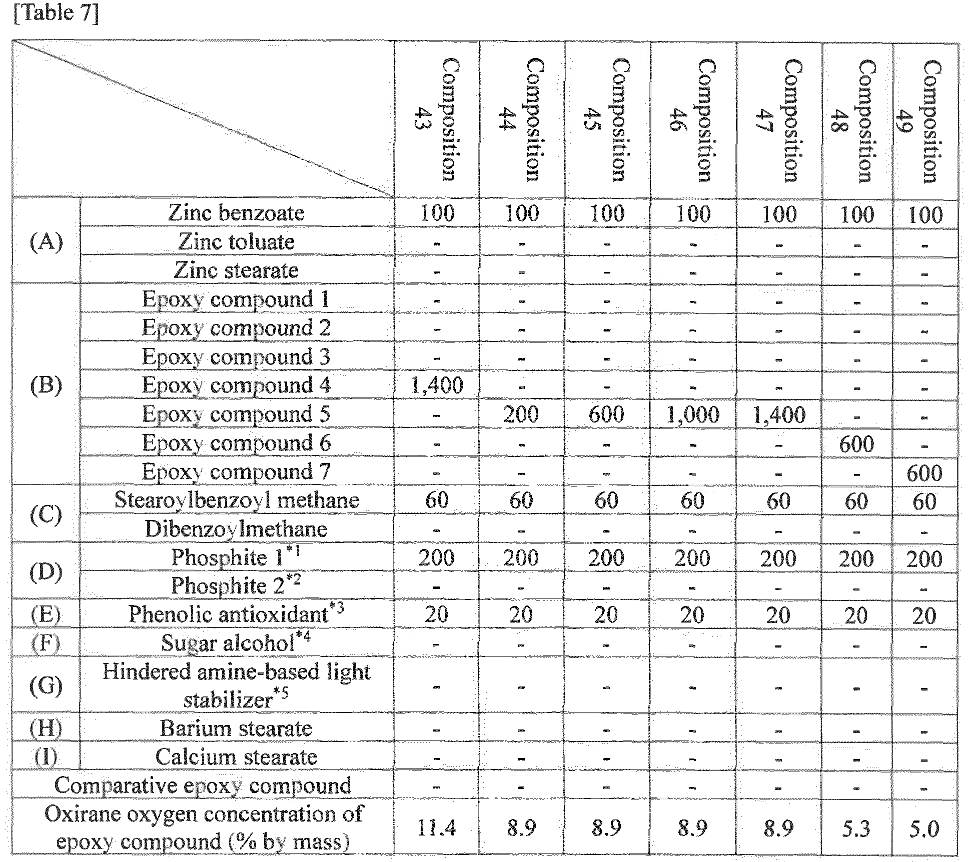

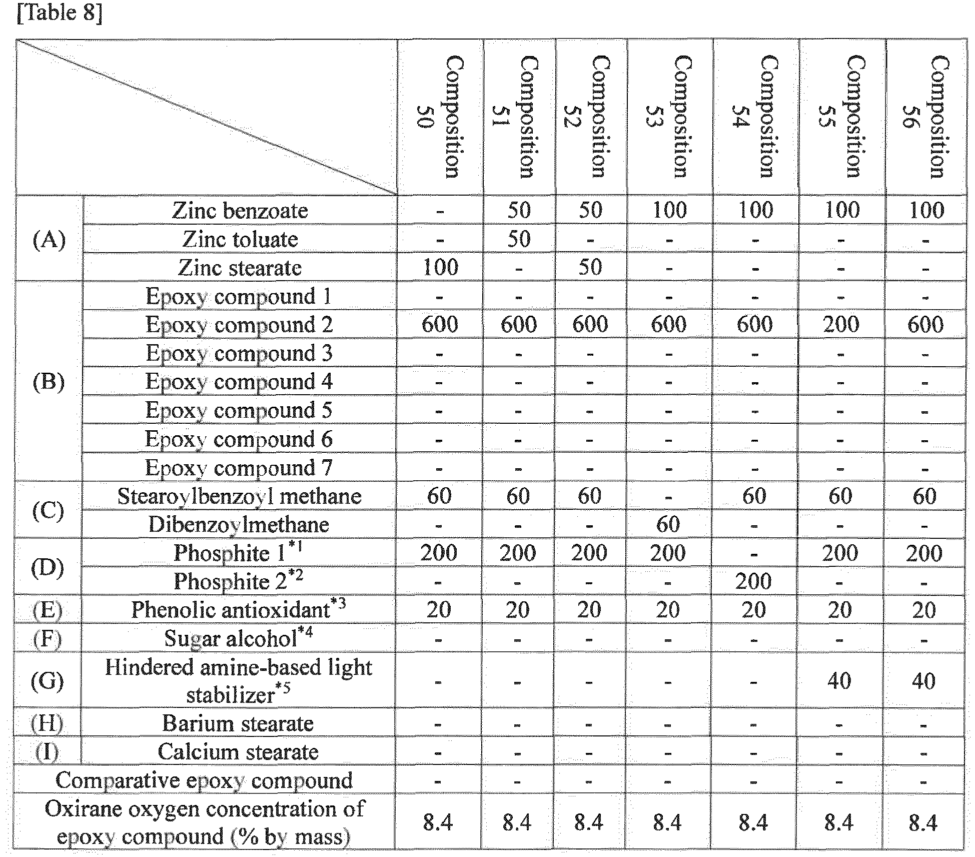

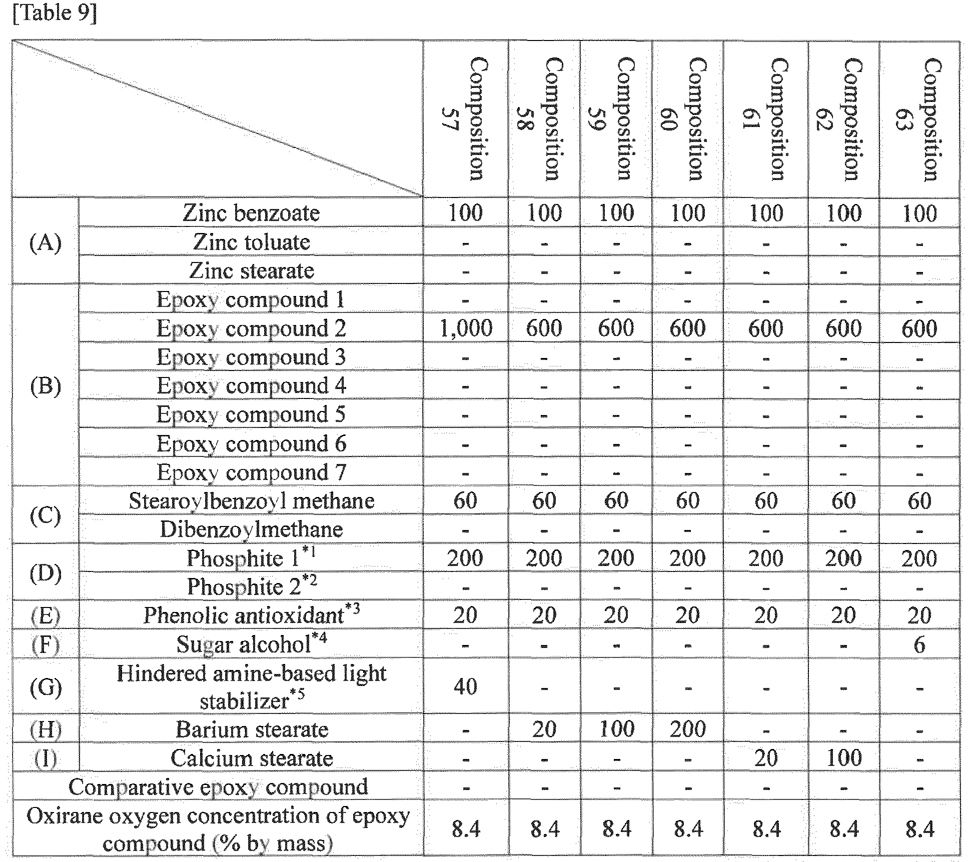

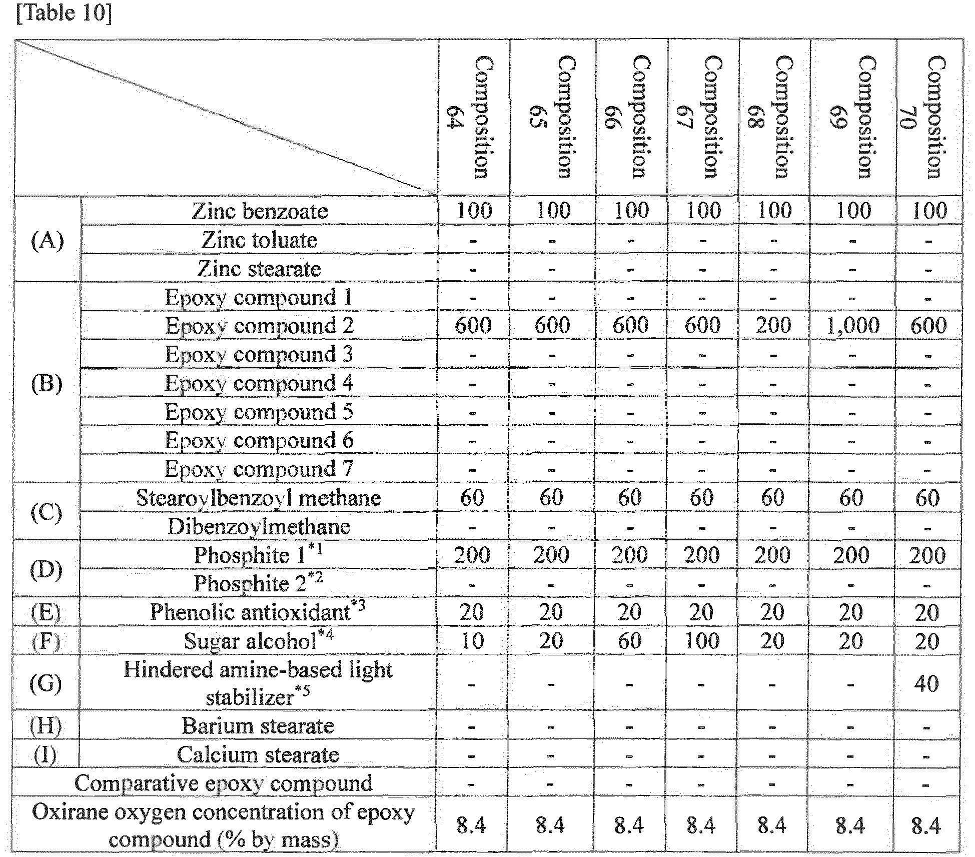

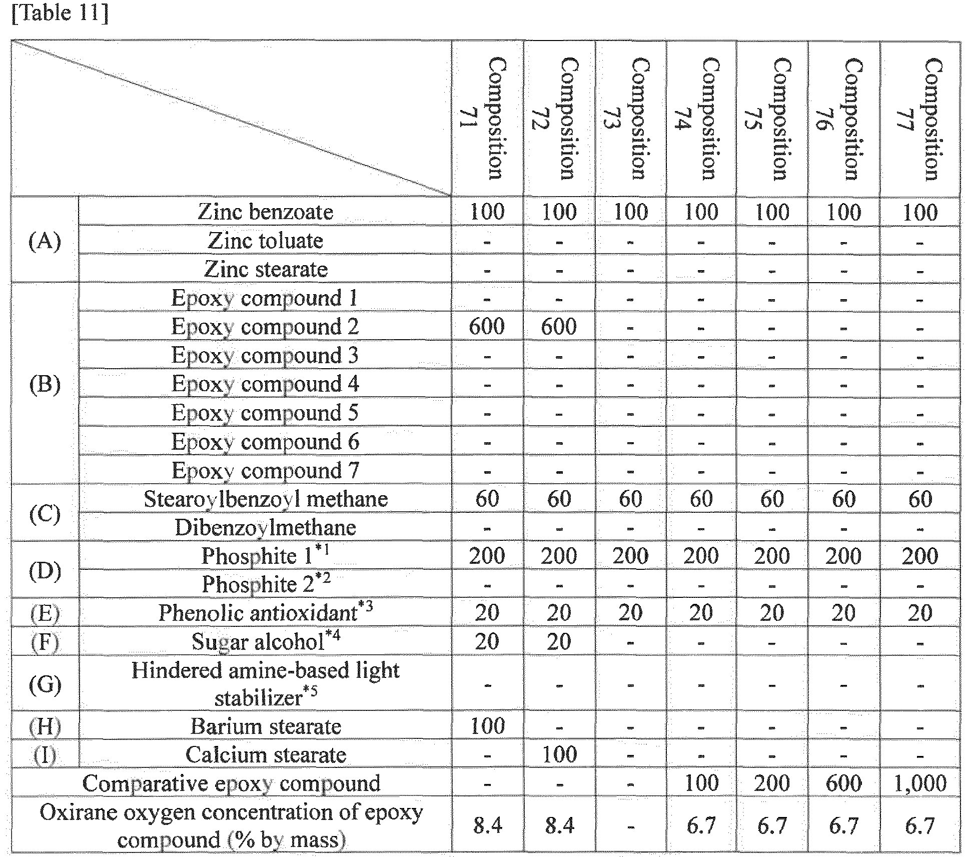

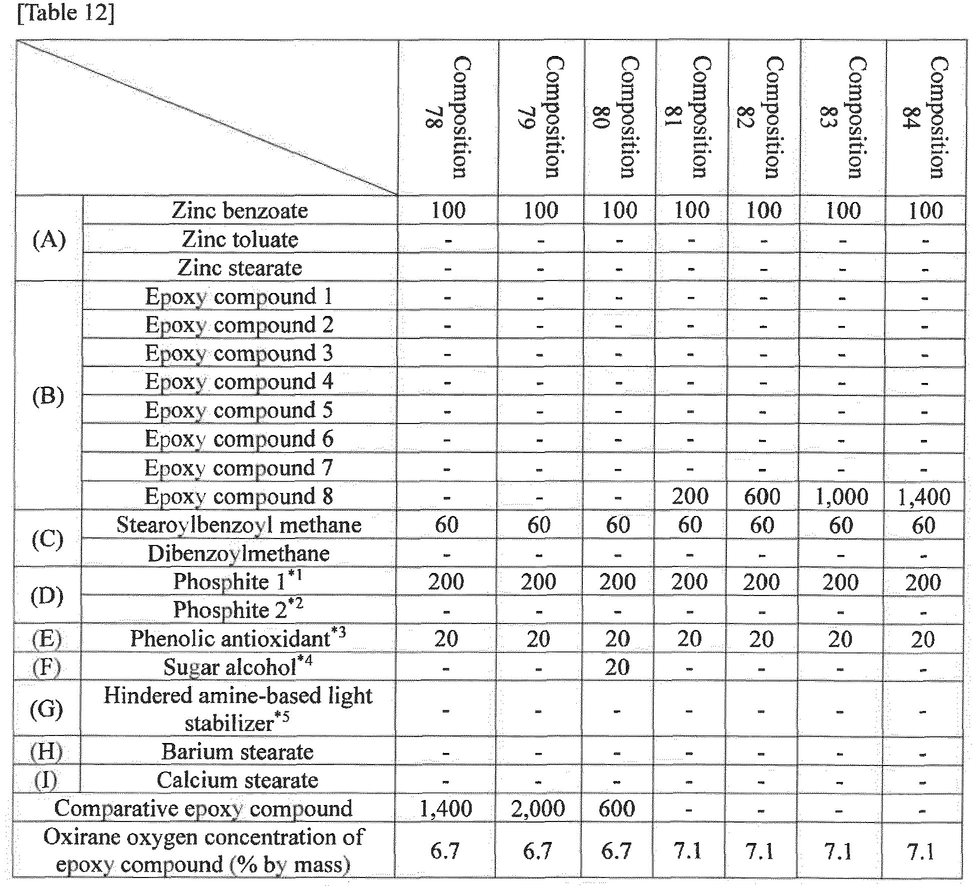

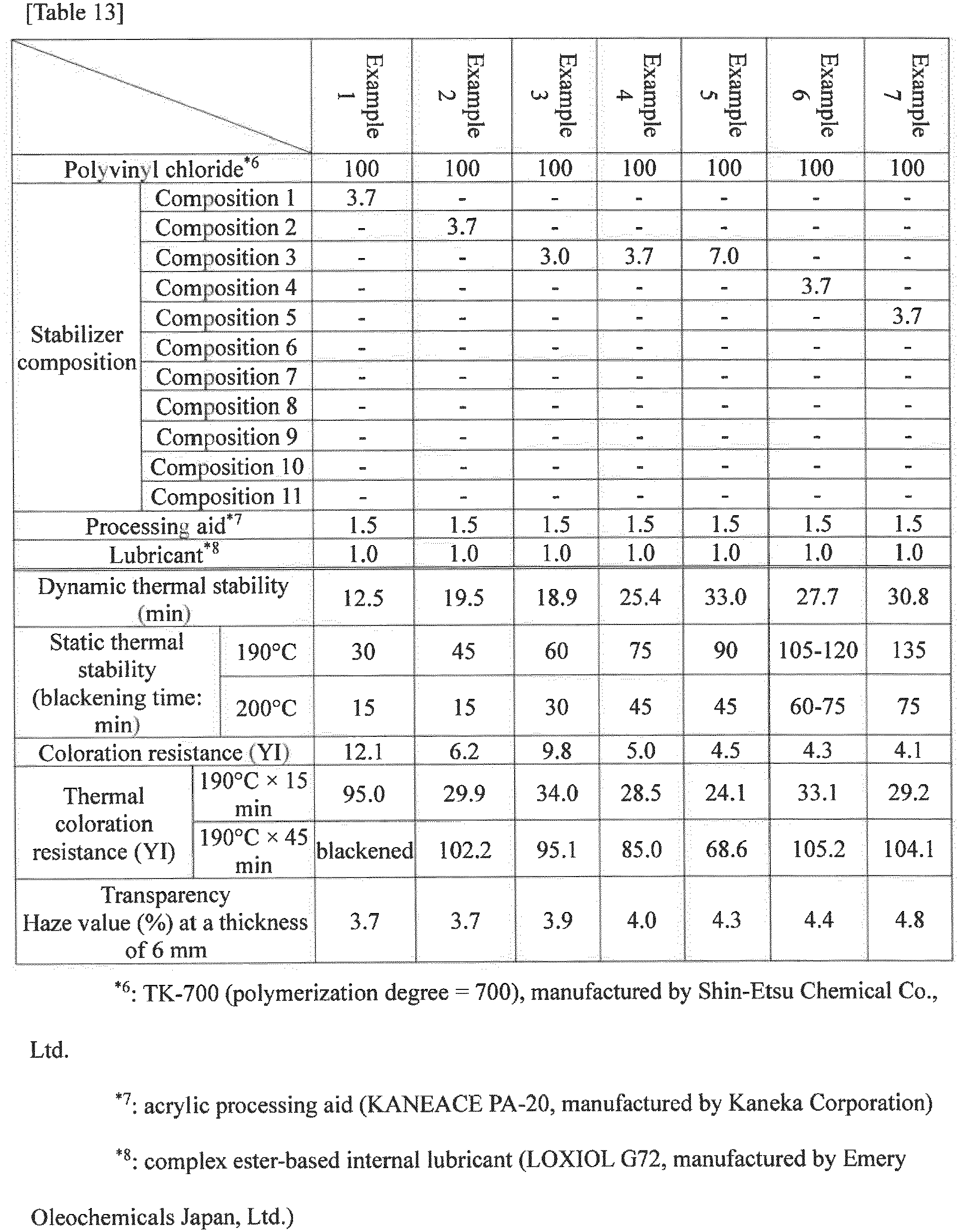

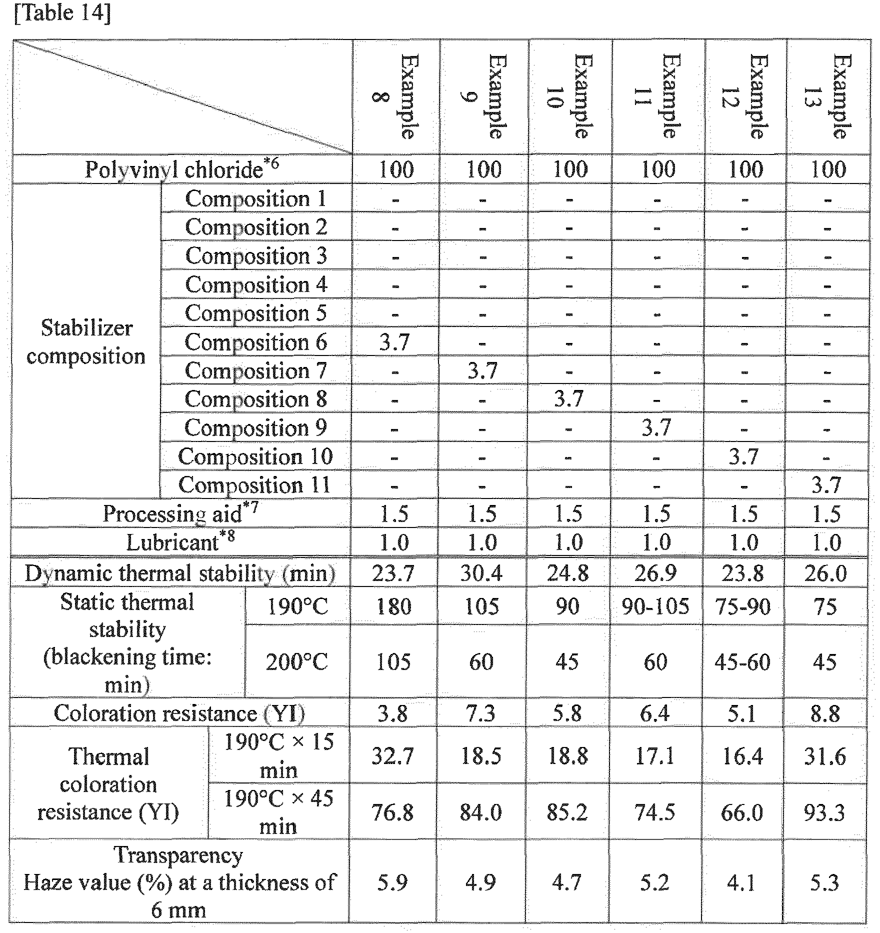

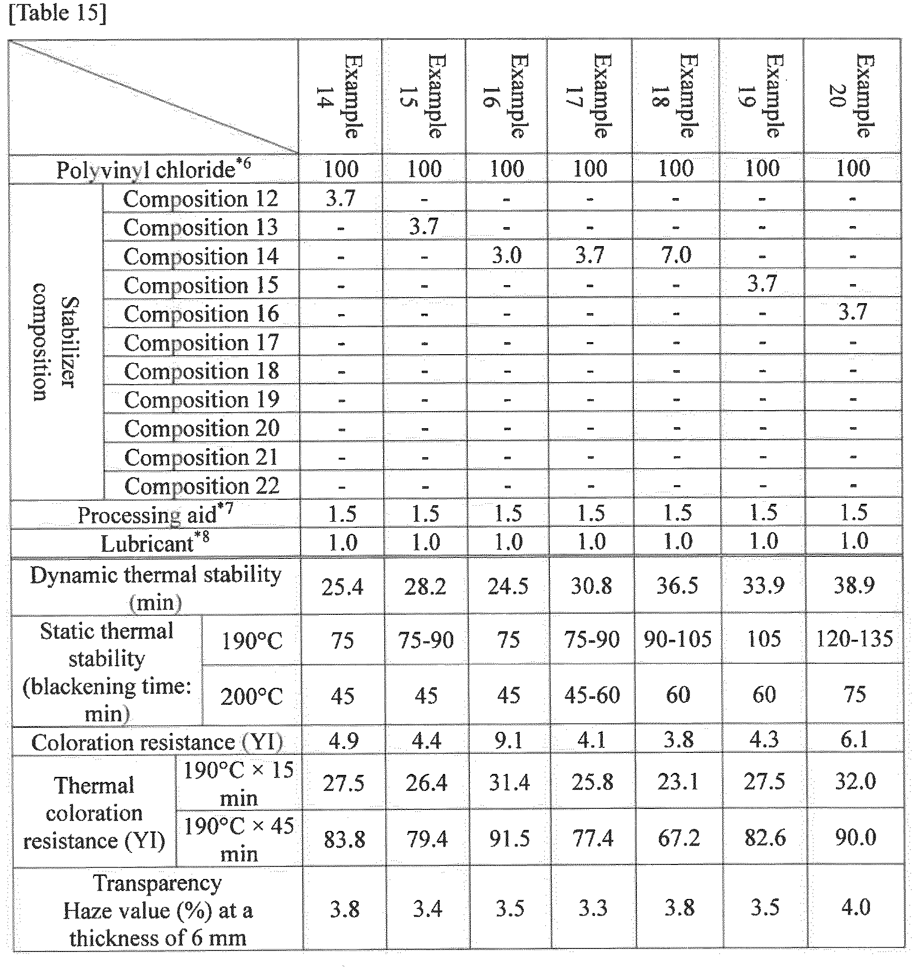

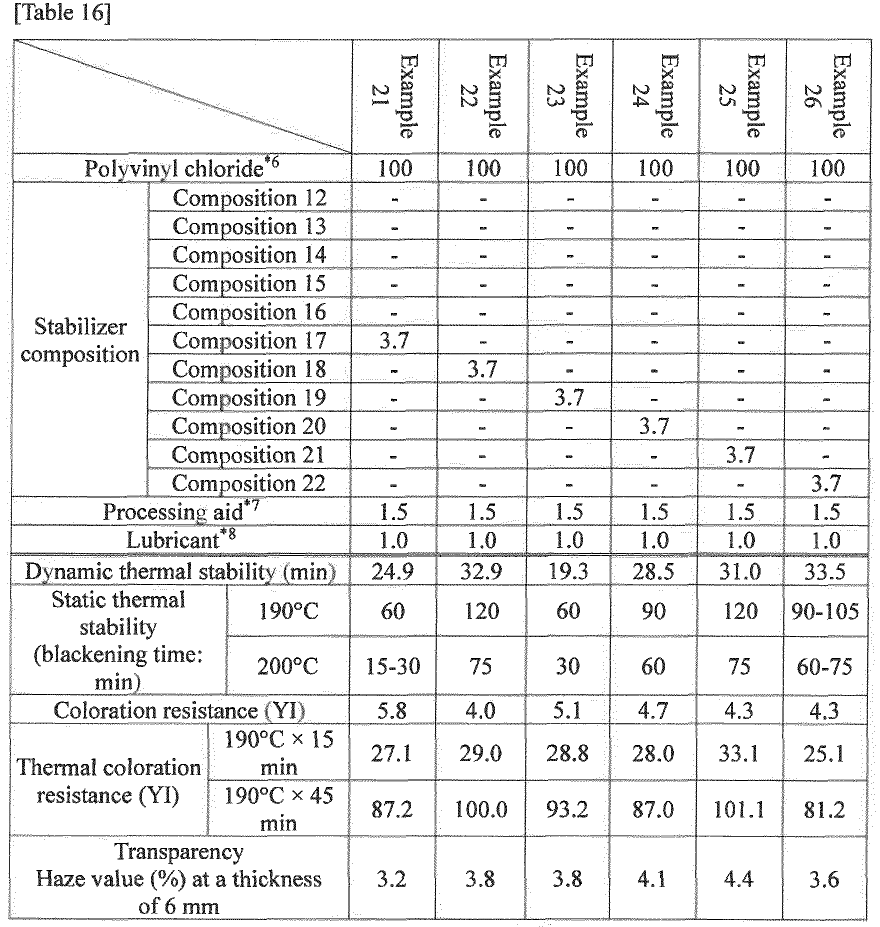

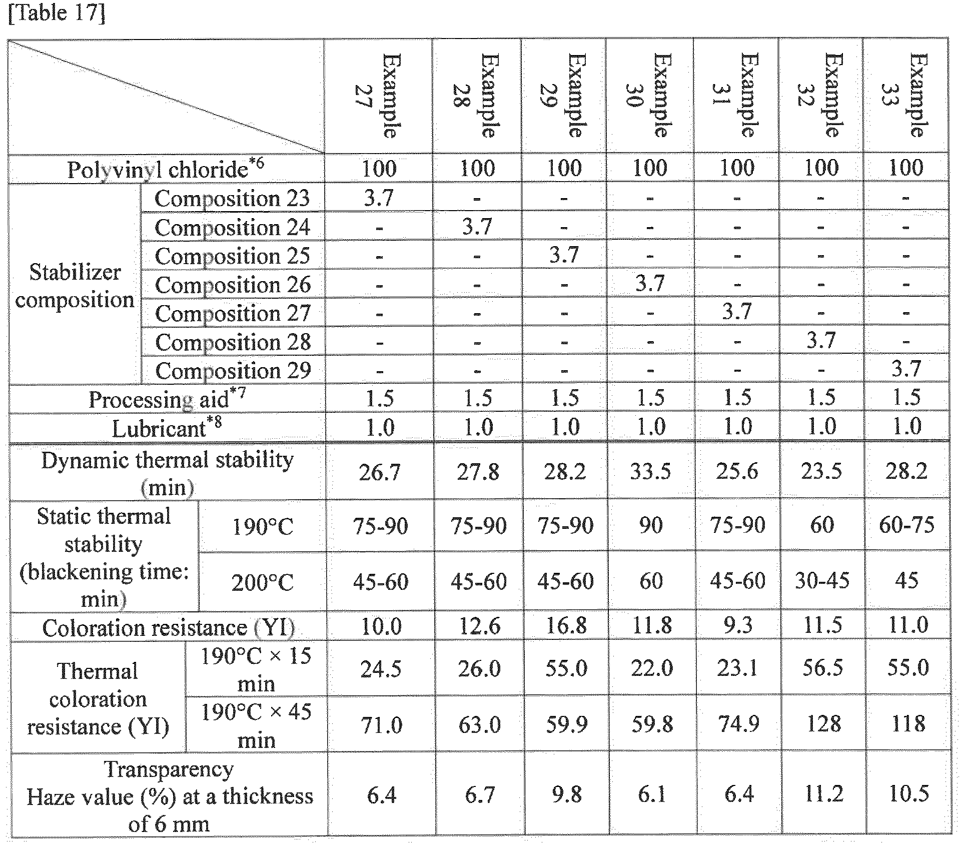

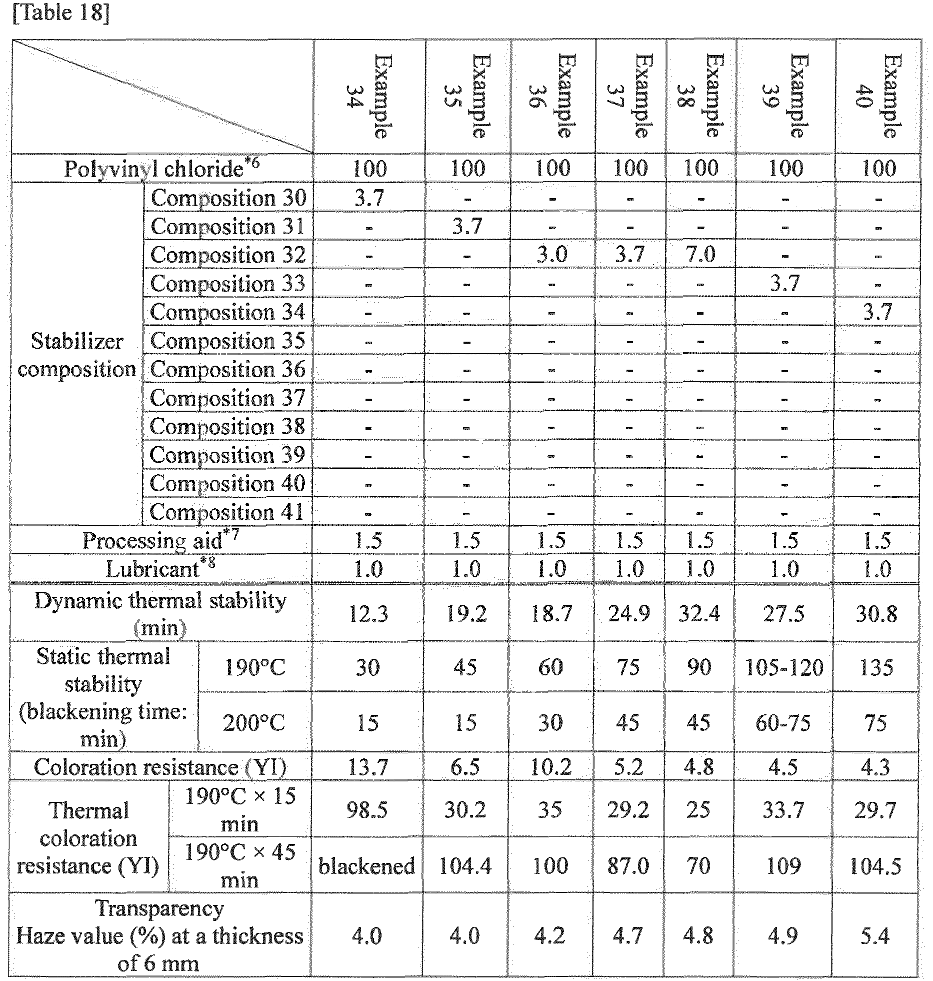

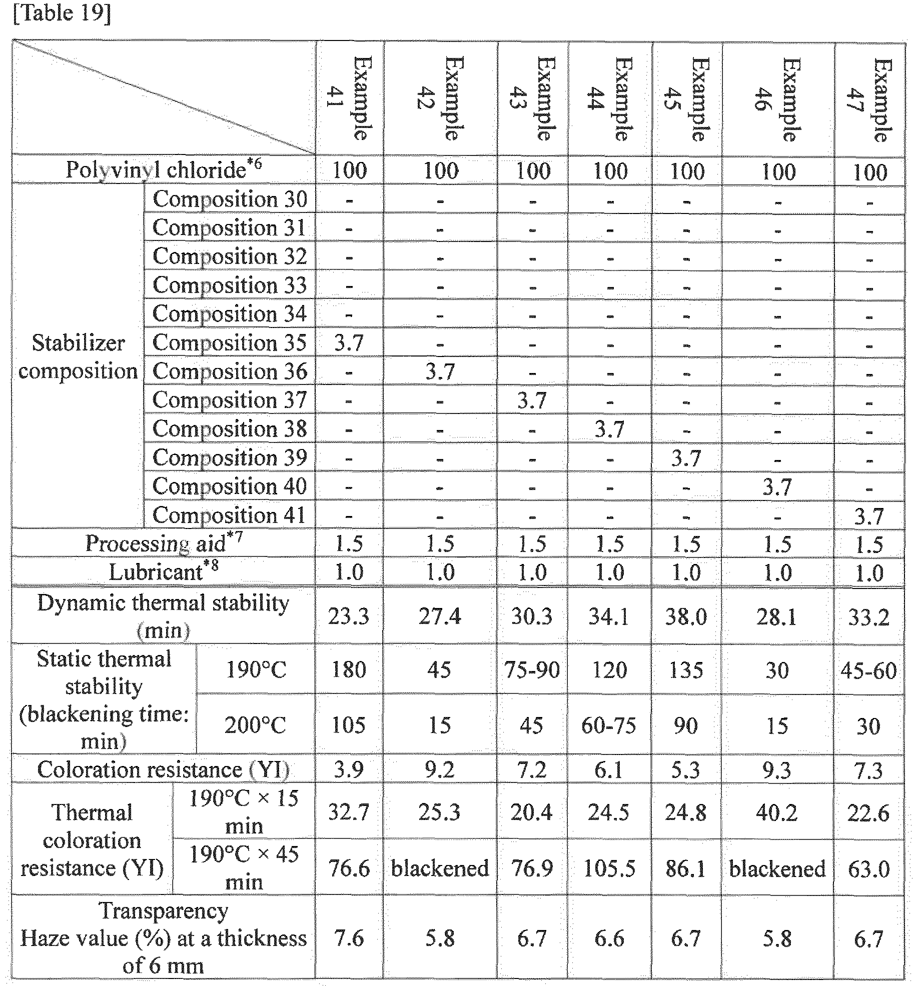

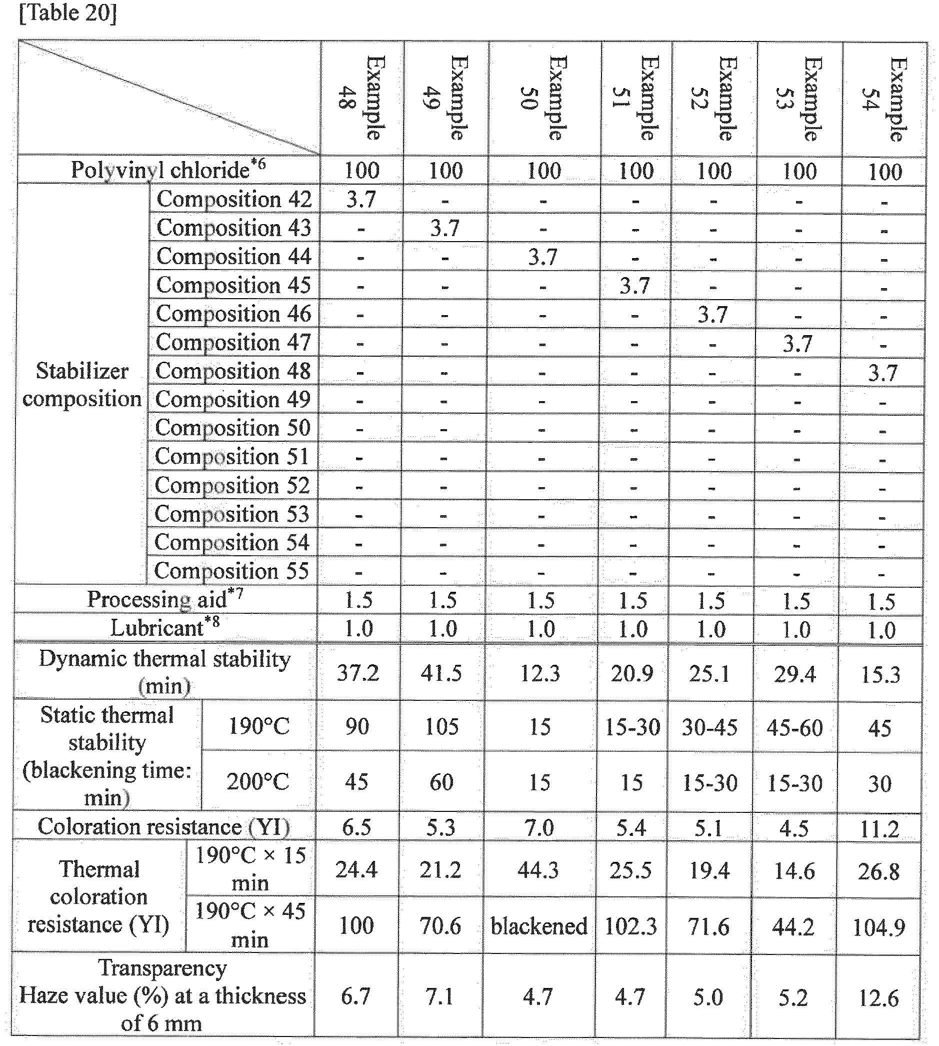

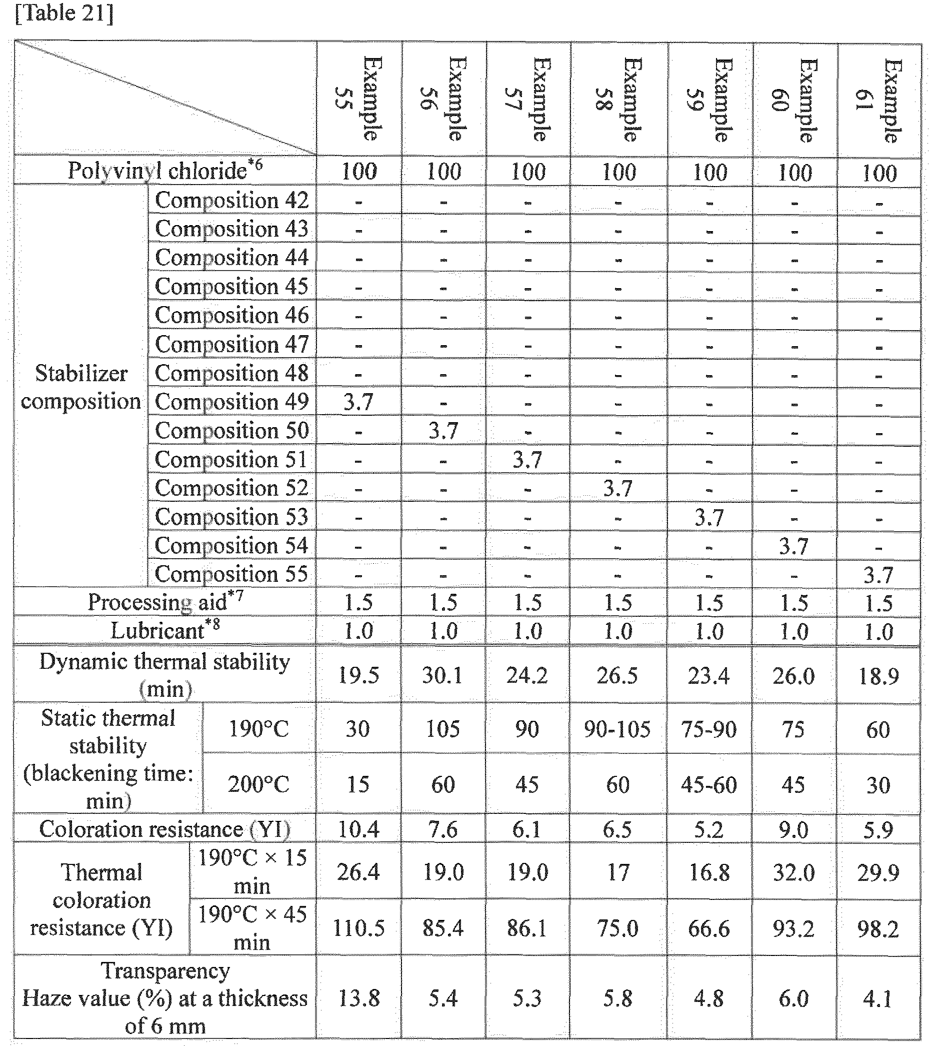

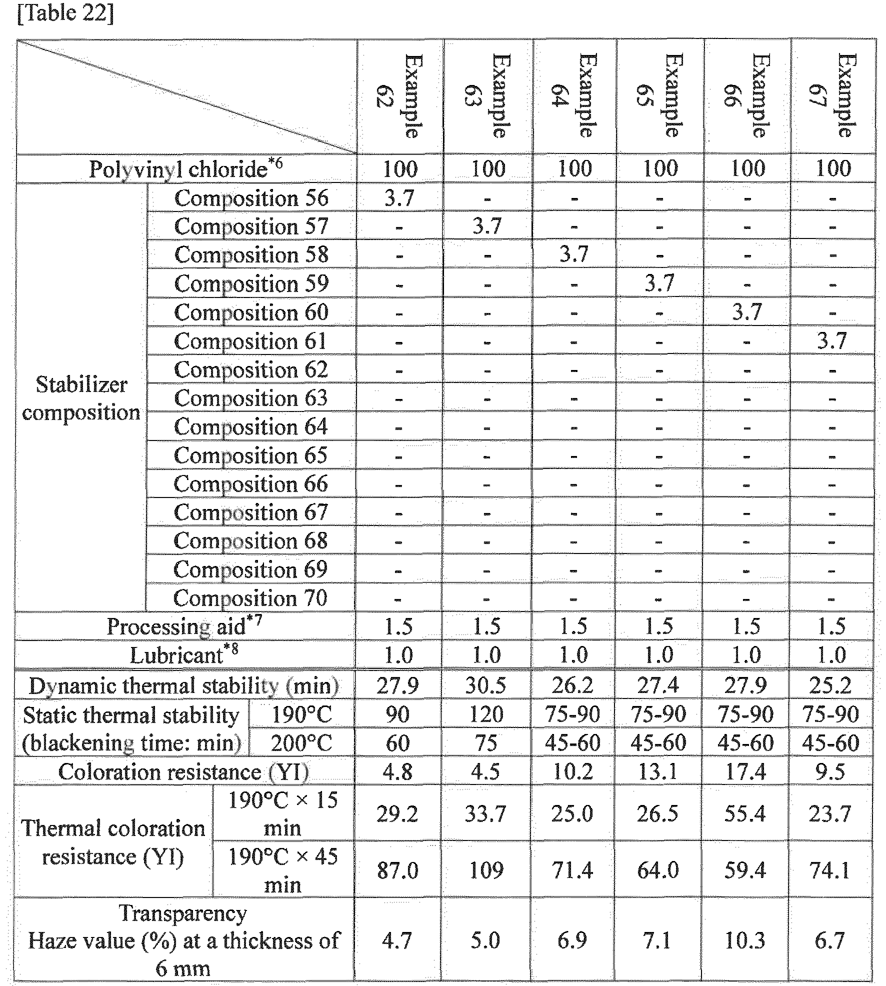

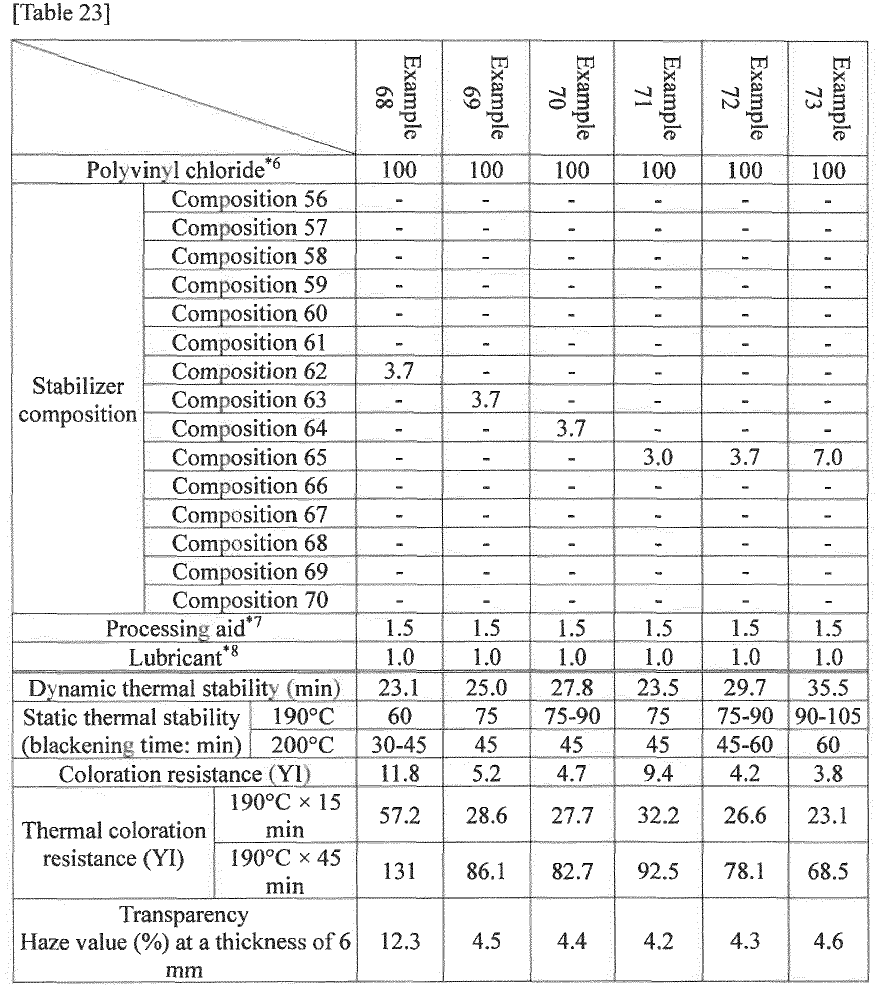

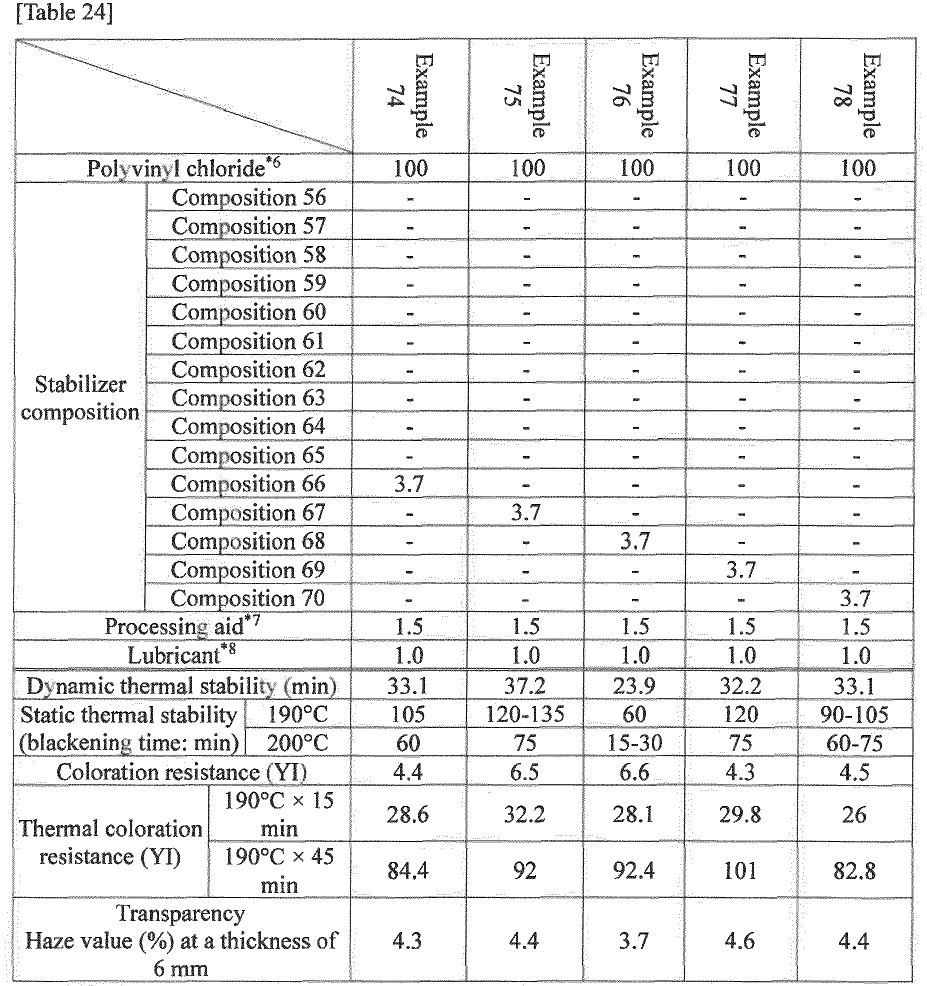

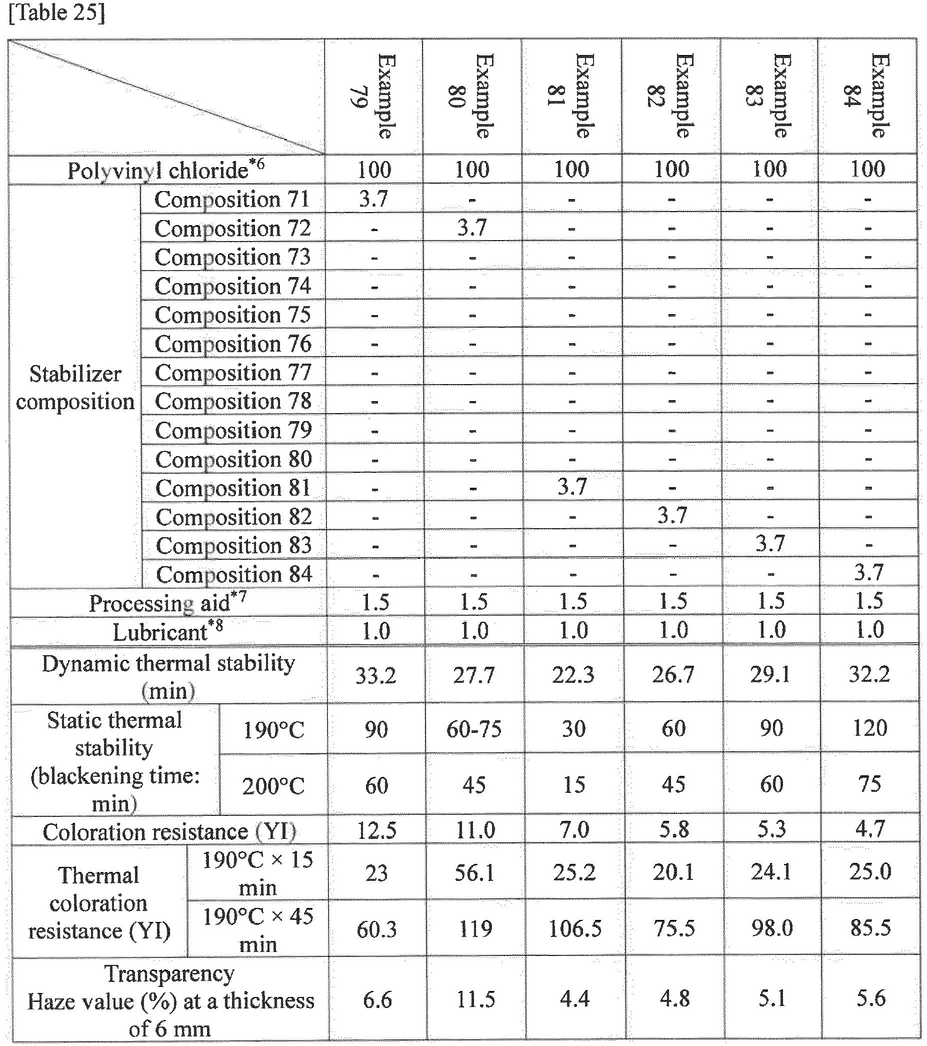

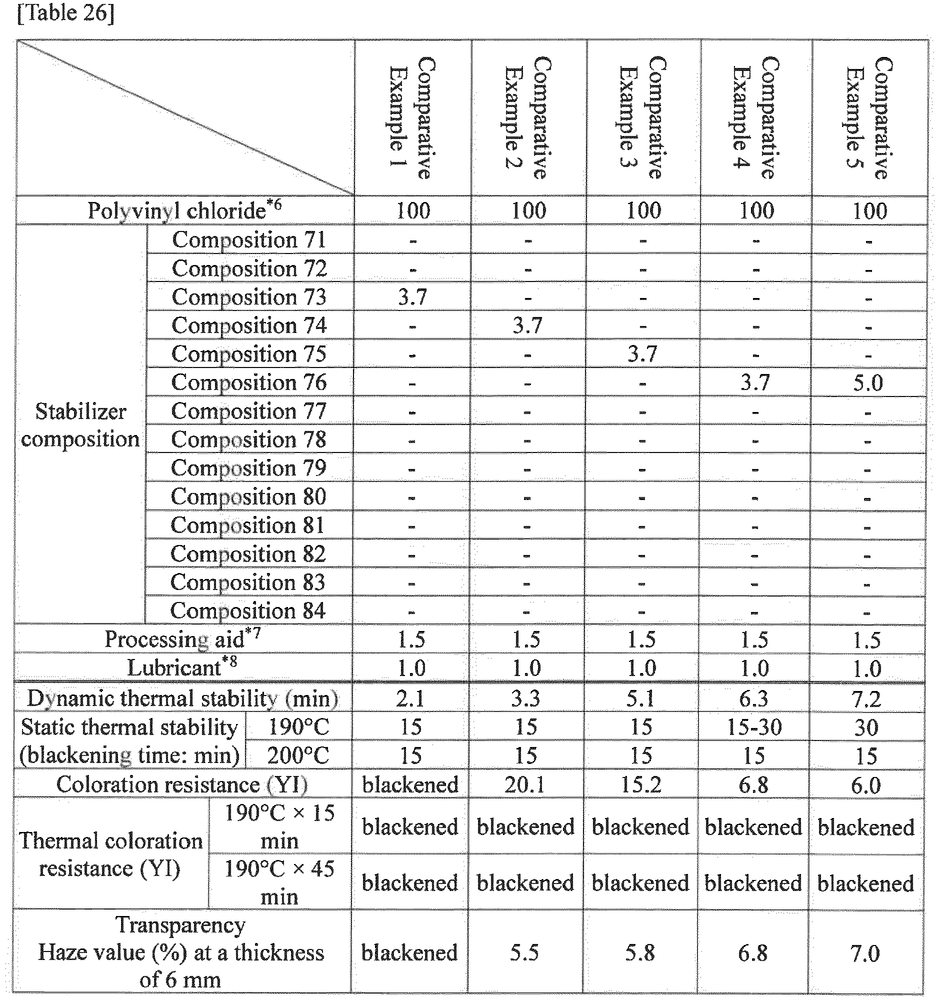

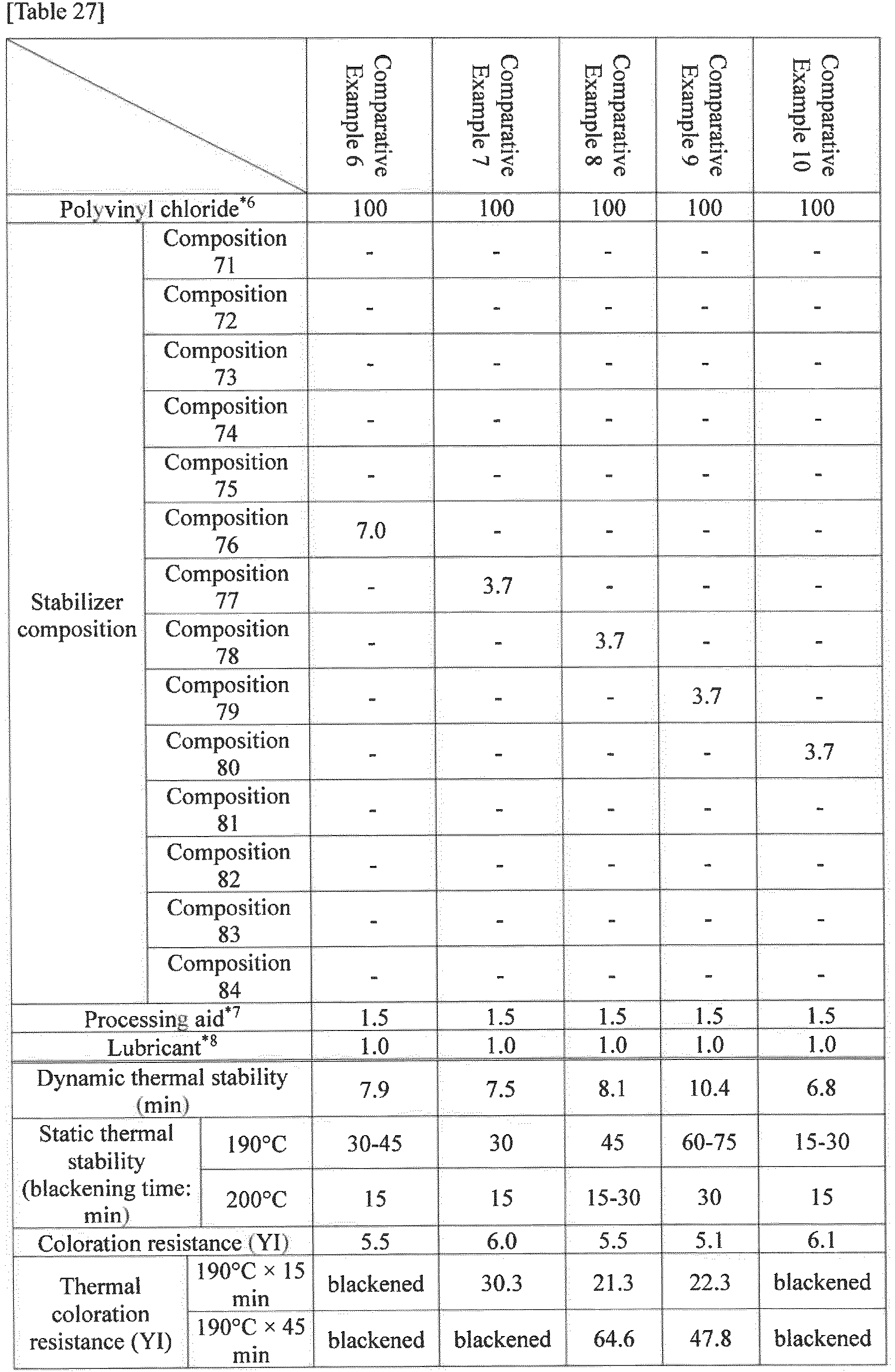

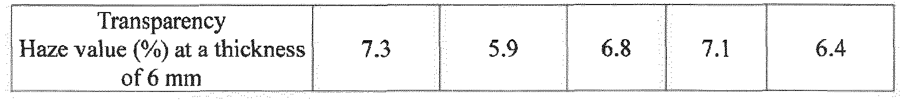

From the results shown in Tables 1 to 12 and Tables 13 to 27, it is apparent that the composition of the present invention can impart excellent thermal stability, coloration resistance, and thermal coloration resistance to a vinyl chloride resin. It is also apparent that, in the case of an application where transparency is required, the composition of the present invention can provide excellent transparency.

Further, it is apparent that the resin composition of the present invention can yield a molded body having excellent thermal stability, coloration resistance, and thermal coloration resistance. Moreover, it is apparent that, in the case of an application where transparency is required, the resin composition of the present invention can yield a molded body having excellent transparency.

## Claims

1. A stabilizer composition, comprising 5 to 2,500 parts by mass of a component (B) with respect to 100 parts by mass of a component (A),
wherein
the component (A) is at least one organic acid zinc salt, and
the component (B) is at least one epoxy compound having a glycidyl ether group and/or a glycidyl ester group.

2. The stabilizer composition according to claim 1, comprising 5 to 300 parts by mass of at least one *β*-diketone compound as a component (C) with respect to 100 parts by mass of the component (A).

3. The stabilizer composition according to claim 1 or 2, comprising 5 to 700 parts by mass of at least one phosphite compound as a component (D) with respect to 100 parts by mass of the component (A).

4. The stabilizer composition according to any one of claims 1 to 3, comprising 5 to 200 parts by mass of at least one phenolic antioxidant as a component (E) with respect to 100 parts by mass of the component (A).

5. The stabilizer composition according to any one of claims 1 to 4, comprising 1 to 1,000 parts by mass of at least one sugar alcohol as a component (F) with respect to 100 parts by mass of the component (A).

6. The stabilizer composition according to any one of claims 1 to 5, comprising 5 to 200 parts by mass of at least one hindered amine-based light stabilizer as a component (G) with respect to 100 parts by mass of the component (A).

7. The stabilizer composition according to any one of claims 1 to 6, wherein the epoxy compound of the component (B) has an oxirane oxygen concentration in a range of 3.0 to 15.0% by mass.

8. The stabilizer composition according to any one of claims 1 to 7, comprising no organotin compound.

9. The stabilizer composition according to any one of claims 1 to 8, for a transparent product.

10. A vinyl chloride resin composition, comprising:
a vinyl chloride resin; and
the stabilizer composition according to any one of claims 1 to 9.

11. The vinyl chloride resin composition according to claim 10, wherein the stabilizer composition is contained in an amount of 0.3 to 15.0 parts by mass with respect to 100 parts by mass of the vinyl chloride resin.

12. A molded body, obtained from the vinyl chloride resin composition according to claim 10 or 11.

13. The molded body according to claim 12, having a haze value of 20.0 or lower at a thickness of 6 mm.
